# EUROPEAN PATENT APPLICATION

(11) **EP 4 804 023 A1**
(43) Date of publication of application: **09.09.2026**
(21) Application number: 24883944.1
(22) Date of filing: 18.06.2024
(51) Int. Cl.: G06F 9/48

(54) **TASK SCHEDULING METHOD AND APPARATUS, AND COMPUTING SYSTEM**

(30) Priority: 31.10.2023 CN 202311440475
(71) Applicant: HUAWEI TECHNOLOGIES CO., LTD., Shenzhen 518129 (CN)
(72) Inventor: LIU, Fei, Shenzhen, Guangdong 518129 (CN)
(74) Representative: Goddar, Heinz J.
(86) International application number: PCT/CN2024/099950
(87) International publication number: WO 2025/091933

(57) **Abstract**

A task scheduling method, an apparatus, and a computing system are provided, relate to the field of computer technologies, and can improve resource utilization of a computing system. A plurality of computing units of a computing system are divided into a plurality of partitions, each partition corresponds to one partition scheduler, and each partition includes a plurality of task queues that are of different priorities and that are configured based on task criticalities. The method includes: A partition criticality of each of the plurality of partitions is determined. When it is determined, based on the partition criticality of each of the plurality of partitions, that inter-partition task scheduling needs to be initiated, a second partition scheduler of a second partition moves a task in a first task queue in a first partition to a task queue in the second partition. A first partition scheduler of the first partition moves a task in a second task queue in the second partition to a task queue in the first partition, where a priority of the first task queue is different from a priority of the second task queue.

## Description

This application claims priority to Chinese Patent Application No. 202311440475.8, filed with the China National Intellectual Property Administration on October 31, 2023 and entitled "TASK SCHEDULING METHOD, APPARATUS, AND COMPUTING SYSTEM", which is incorporated herein by reference in its entirety.

### TECHNICAL FIELD

This application relates to the field of computer technologies, and in particular, to a task scheduling method, an apparatus, and a computing system.

### BACKGROUND

In highly complex and large-scale parallel computing systems, for example, a server system including a plurality of cores and a plurality of processors, a cluster computing system of a data center, a high-performance computing (high-performance computing, HPC) supercomputing system, and cloud computing, proper task scheduling faces many challenges.

An important challenge is that, in a process in which a scheduler in a computing system performs parallel task scheduling, task scheduling imbalance exists in the computing system, resulting in low resource utilization of the computing system.

### SUMMARY

This application provides a task scheduling method, an apparatus, and a computing system, to improve resource utilization of the computing system.

The following technical solutions are used in this application.

According to a first aspect, this application provides a task scheduling method, used to perform task scheduling on a computing system, where the computing system includes a plurality of computing units, the plurality of computing units are divided into a plurality of partitions, each of the plurality of partitions corresponds to one partition scheduler, each partition includes a plurality of task queues that are of different priorities and that are configured based on task criticalities, and the task criticality is determined based on a latency tolerance of a computing unit for a task that is run by the computing unit. The method includes: A partition criticality of each of the plurality of partitions is determined, where the partition criticality indicates a latency tolerance of a computing unit in the partition for a to-be-scheduled task. When it is determined, based on the partition criticality of each of the plurality of partitions, that inter-partition task scheduling needs to be initiated, a second partition scheduler moves a task in a first task queue in a first partition in the plurality of partitions to a task queue in a second partition in the plurality of partitions, to cause a computing unit in the second partition to process the task, where the second partition scheduler is a partition scheduler corresponding to the second partition. In addition, a first partition scheduler moves a task in a second task queue in the second partition in the plurality of partitions to a task queue in the first partition, to cause a computing unit in the first partition to process the task, where the first partition scheduler is a partition scheduler corresponding to the first partition, and a priority of the first task queue is different from a priority of the second task queue.

In this application, whether the inter-partition task scheduling is needed may be determined based on the partition criticality. When the inter-partition task scheduling is needed, the task scheduling is performed between two partitions, so that balanced task scheduling in the computing system can be implemented and resource utilization of the computing system can be improved.

Further, the plurality of computing units of the computing system are partitioned, and parallel task scheduling is performed on the plurality of partitions. In addition, the partition scheduler is configured for each partition to perform intra-partition task self-scheduling for each partition, to implement fine-grained task scheduling. For different partitions, the inter-partition task scheduling is performed, if necessary, to implement coarse-grained task scheduling. It can be learned that, in the task scheduling method provided in embodiments of this application, both the fine-grained task scheduling and the coarse-grained task scheduling can be considered, and a scheduling effect is good.

In a possible implementation, the plurality of computing units include a processing core of one or more processors, where the one or more processors include a heterogeneous first processor and/or a heterogeneous second processor.

Optionally, the first processor is a general-purpose processor, for example, a CPU, and the second processor is a heterogeneous processor relative to the first processor, for example, a GPU, an FPGA, or an ASIC.

In a possible implementation, the partition criticality is a proportion of a processing core whose value of core criticality is greater than a first threshold in core criticalities of a plurality of processing cores in one partition, where the core criticality is determined based on a latency tolerance of the processing core for a task running on the processing core. In this application, a latency tolerance of the processing core for a task is related to a time slice (the time slice is a resource granularity of the processing core) consumed by the task in a task running process and/or waiting time of the processing core. A lower latency tolerance of the processing core for a task indicates a higher task criticality, and a higher latency tolerance of the processing core for a task indicates a lower task criticality.

In a possible implementation, the task scheduling method provided in this embodiment of this application further includes: A criticality difference between the plurality of partitions is calculated based on partition criticalities of the plurality of partitions, where the criticality difference indicates a difference between the plurality of partition criticalities of the plurality of partitions, and the criticality difference between the plurality of partitions may be used to measure whether the task scheduling in the entire computing system is balanced. When the criticality difference is greater than a second threshold, it is determined that the inter-partition task scheduling needs to be initiated. When the criticality difference is less than or equal to the second threshold, each partition scheduler schedules a task in each partition.

In this application, the computing system is partitioned, and the intra-partition task self-scheduling is performed, so that resource utilization of the processing core in the partition can be improved. When the criticality difference between the partitions is large, the inter-partition task scheduling is performed, so that the resource utilization of the computing system can be improved.

In a possible implementation, the plurality of partitions of the computing system correspond to one federation scheduler, and the federation scheduler is configured to manage a plurality of partition schedulers. The federation scheduler may obtain the partition criticality of each of the plurality of partitions from the partition scheduler. When determining, based on the partition criticality of each of the plurality of partitions, that the inter-partition task scheduling needs to be initiated, the federation scheduler determines the first partition and the second partition from the plurality of partitions. The first partition is a partition corresponding to a partition criticality with a largest value in the plurality of partition criticalities, and the second partition is a partition corresponding to a partition criticality with a smallest value in the plurality of partition criticalities. The federation scheduler separately sends a bilateral scheduling instruction to the first partition scheduler and the second partition scheduler, where the bilateral scheduling instruction instructs to perform inter-partition task scheduling on the first partition and the second partition.

In a possible implementation, the priority of the task queue increases as the task criticality increases, and quantities of time slices allocated to the queues of different priorities are different. The task criticality increases as a latency tolerance of the processing core for a task decreases. The first task queue is a queue with a highest priority in task queues in the first partition, and the second task is a queue with a lowest priority in task queues in the second partition.

In an inter-partition task scheduling process, a partition with a high partition criticality obtains a task from a low-priority queue in a partition with a low partition criticality, so that the high partition criticality decreases. The partition with the low partition criticality obtains a task from a high-priority queue in the partition with the high partition criticality, so that the low partition criticality increases. In this way, a difference between the partition criticalities of the two partitions is reduced, and balanced task scheduling between the two partitions is implemented.

In a possible implementation, that each partition scheduler schedules the task in each partition includes: For any one of a plurality of tasks in each partition, in a process in which a computing unit executes the task, the partition scheduler updates a queue to which the task belongs, to cause a processing core to execute the task based on a priority of a queue to which the task belongs.

In a possible implementation, updating the queue to which the task belongs includes: updating a task criticality of the task; and updating, based on the task criticality of the task, the queue to which the task belongs, where when the task criticality of the task increases, the partition scheduler moves the task from the current queue to a queue whose priority is higher than a priority of the current queue; or when the task criticality of the task decreases, the partition scheduler moves the task from the current queue to a queue whose priority is lower than the priority of the current queue.

In this application, an intra-partition task scheduling process is a task criticality-based dynamic scheduling process. The partition scheduler of each partition performs task self-scheduling on the partition, and performs the scheduling based on the task criticality of the task in the partition. A scheduling granularity is finer, so that balanced intra-partition task scheduling is implemented, and the resource utilization of the processing core in the partition can be improved. In addition, for each task, overheads needed for obtaining the task criticality are low, and scheduling overheads needed for the task scheduling can be significantly reduced.

Further, in comparison with a static scheduling method, in this embodiment of this application, queue update is performed based on the task criticality without depending on prior knowledge and without needing profiling performance for data collection. This greatly simplifies development and engineering optimization.

In a possible implementation, the task scheduling method provided in this embodiment of this application further includes: Each partition scheduler obtains a task dependency between the plurality of tasks in the partition; respectively determines initial task criticalities of the plurality of tasks based on task dependency depths indicated by the task dependency; and respectively determines, based on the initial task criticalities of the plurality of tasks, initial queues for the plurality of tasks from the plurality of queues of different priorities in the partition.

In this application, a deeper dependency depth of a task indicates that a plurality of other tasks all need to depend on data of the task, and the task has a higher criticality.

According to a second aspect, an embodiment of this application provides a computing system. The computing system includes a partition scheduler, and may further include a federation scheduler. The partition scheduler and the federation scheduler include modules configured to implement the method according to the first aspect and one of the possible implementations of the first aspect, for example, an obtaining module, a determining module, a scheduling module, a computing module, and a sending module.

The partition scheduler and the federation scheduler in the computing system have a function of implementing behavior in a method instance according to any one of the first aspect and the possible implementations of the first aspect. The function may be implemented by hardware, or may be implemented by hardware executing corresponding software. The hardware or the software includes one or more modules corresponding to the foregoing function.

According to a third aspect, this application provides a compute device, including a storage and at least one processor connected to the storage. The storage is configured to store computer program code. The computer program code includes computer instructions, and when the computer instructions are executed by the at least one processor, the compute device is caused to perform the method according to any one of the first aspect and the possible implementations of the first aspect.

According to a fourth aspect, this application provides a computer-readable storage medium, storing computer instructions. When the computer instructions are run on a computer, the method according to any one of the first aspect and the possible implementations of the first aspect is performed.

According to a fifth aspect, this application provides a computer program product. The computer program product includes computer instructions, and when the computer instructions are run on a computer, the method according to any one of the first aspect and the possible implementations of the first aspect is performed.

According to a sixth aspect, this application provides a chip system, including a processor, configured to invoke a computer program from a storage and run the computer program, to cause a storage device in which the chip system is installed to perform the method according to any one of the first aspect and the possible implementations of the first aspect.

It should be understood that, for technical effects achieved by the technical solutions in the second aspect to the sixth aspect and the corresponding possible implementations in this application, refer to the foregoing technical effects of the first aspect and the corresponding possible implementations. Details are not described herein again.

### BRIEF DESCRIPTION OF DRAWINGS

FIG. 1 is a diagram of a task dependency graph according to an embodiment of this application;
FIG. 2 is a first diagram of an architecture of a computing system according to an embodiment of this application;
FIG. 3A to FIG. 3C are diagrams of a relationship between partitions and schedulers in a computing system according to an embodiment of this application;
FIG. 4 is a second diagram of an architecture of a computing system according to an embodiment of this application;
FIG. 5A and FIG. 5B are diagrams of scheduler deployment in a computing system according to an embodiment of this application;
FIG. 6A and FIG. 6B are diagrams of scheduler deployment in a computing system according to an embodiment of this application;
FIG. 7 is a diagram of scheduler deployment in a computing system according to an embodiment of this application;
FIG. 8 is a diagram of scheduler deployment in a computing system according to an embodiment of this application;
FIG. 9 is a diagram of scheduler deployment in a computing system according to an embodiment of this application;
FIG. 10 is a first schematic flowchart of a task scheduling method according to an embodiment of this application;
FIG. 11 is a second schematic flowchart of a task scheduling method according to an embodiment of this application;
FIG. 12 is a diagram of a task queue according to an embodiment of this application;
FIG. 13 is a third schematic flowchart of a task scheduling method according to an embodiment of this application;
FIG. 14 is a fourth schematic flowchart of a task scheduling method according to an embodiment of this application;
FIG. 15 is a diagram of a partition criticality reporting manner according to an embodiment of this application;
FIG. 16 is a diagram of a task scheduling process according to an embodiment of this application; and
FIG. 17 is a diagram of a structure of a computing system according to an embodiment of this application.

### DESCRIPTION OF EMBODIMENTS

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, the terms "first", "second", and the like are used to distinguish between different objects, but are not used to describe a specific sequence of the objects. For example, a first partition, a second partition, and the like are used to distinguish between different partitions, but are not used to describe a specific sequence of the partitions.

In embodiments of this application, the word like "example" or "for example" is used to represent giving an example, an illustration, or a description. Any embodiment or design scheme described as an "example" or "for example" in embodiments of this application should not be explained as being more preferred or having more advantages than another embodiment or design scheme. To be precise, use of the word like "example" or "for example" is intended to present a relative concept in a specific manner.

In descriptions of embodiments of this application, unless otherwise specified, "a plurality of" means two or more, and "a plurality of" may also be described as "at least two".

Embodiments of this application provide a task scheduling method, an apparatus, and a system, and mainly relate to flexibly scheduling, in a computing system with high computational complexity and a large scale and for a multi-core, multi-processor, or multi-compute-node computational architecture, a task in the computing system by using the provided task scheduling method, to achieve overall load balance of the computing system, that is, achieve balanced task scheduling, so that resource utilization of the computing system is improved.

First, some technical terms related to the task scheduling method, the apparatus, and the system provided in embodiments of this application are explained and described.

### 1. Task scheduling

In a computing system, the essence of a task is access, computation, analysis, and processing of data. In an actual processing process, there may be a sequential dependency between data, in other words, there is a dependency between tasks. For example, to execute a task A, a task B needs to be executed first, because processing of the task A depends on a processing result of the task B.

To ensure efficient processing of large-scale data, tasks needs to be executed in parallel by utilizing compute resources to the greatest extent, especially for a multi-core computing system. However, because storage resources such as memory and cache are generally and clearly fewer than operation units, a difference occurs between the tasks scheduled by a scheduler due to execution of a memory access operation or a computing operation. The task scheduling causes, based on the dependency and the difference between the tasks, the tasks to be scheduled and executed according to a specific policy.

It should be understood that, in embodiments of this application, the tasks may include I/O intensive tasks and compute intensive tasks. Optionally, the I/O intensive tasks include memory access tasks or tasks of interacting with users, and the compute intensive tasks may include tasks in the cloud computing field, the AI computing field, and the like.

### 2. Task criticality

For each task, a task criticality of the task may be defined. A task criticality is determined based on a latency tolerance of a processing core for a task that is run by the processing core. A latency tolerance of the processing core for a task is related to a time slice consumed by the task in a task running process and/or waiting time of the processing core. The time slice is a measurement unit of duration allocated to a processor to execute a task, and one task consumes one or more time slices.

It may be understood that the waiting time of the processing core or the time slice consumed by the task is related to an operation related to the task running process, for example, a memory access operation and/or a computing operation. For example, when an operation of initiating a memory access request exists in the task running process, it indicates that data used by the processing core to perform computation is not ready, the data needs to be obtained by using the memory access operation, and then the processing core performs the computing operation based on the obtained data. It can be learned that, when the execution of the task proceeds to the memory access operation, latency of the task increases, the processing core currently does not execute the computing operation, and a time slice is no longer consumed. The processing core is in an idle or suspended state, and the processing core needs to wait for ending of the memory access operation before executing the computing operation. It can be learned that the waiting time of the processing core is long. Therefore, it is considered that a latency tolerance of the processing core for a task is low. It may be understood that a task that consumes a small quantity of time slices or causes long waiting time of the processing core may be referred to as a high-latency task.

Relatively, when an operation in the task running process is the computing operation, the processing core is currently in a busy state, and a small quantity of time slices are consumed. In addition, if a current operation is the computing operation, it indicates that the data used by the processing core to perform computation is ready, and there is no need to initiate the memory access operation. The processing core does not need to wait or has short waiting time. Therefore, a latency tolerance of the processing core of a task for the task is high. It may be understood that a task that consumes a large quantity of time slices or causes short waiting time of the processing core may be referred to as a low-latency task.

It should be understood that a relationship between the task criticality and a latency tolerance of the processing core for a task is as follows: A lower latency tolerance of the processing core for a task indicates a higher task criticality, and a higher latency tolerance of the processing core for a task indicates a lower task criticality. In other words, a higher task criticality indicates that the processing core is idler, and a lower task criticality indicates that the processing core is busier. In some cases, it may also be understood as that a task criticality of a memory access task is high, and a task criticality of a compute task is low.

In an implementation, the task criticality *C_{L}* is defined by using the following bisection formula: ${C}_{L} = \left\{\begin{matrix}1 , low latency tolerance \\ 0 , high latency tolerance\end{matrix}\right.$

The task criticality includes a high task criticality (*C_{L}*=1) and a low task criticality (*C_{L}*=0). A low latency tolerance corresponds to the high task criticality, and a high latency tolerance corresponds to the low task criticality.

Optionally, the task criticality *C_{L}* may alternatively be defined in another manner. For example, the task criticality *C_{L}* may include more values. The latency tolerance may be divided into a plurality of levels, and different levels correspond to different task criticalities.

### 3. Core criticality

The core criticality (*C_{core}*) is determined based on a latency tolerance of a processing core for a task running on the processing core. Refer to the foregoing descriptions of the definition of the task criticality. At a specific moment, the core criticality is equal to the task criticality, and in a specific time period, the core criticality may be different from the task criticality. This is because a processing core that runs a task may change. For example, at a current moment, a task is run by a processing core 1, and at a next moment, the task is run by a processing core 2. A core criticality of the processing core 1 is no longer equal to a task criticality of the task.

### 4. Partition criticality

First, a concept of partitioning in embodiments of this application is described. Partitioning is block division performed on computing units. A computing system includes a plurality of computing units, the plurality of computing units are divided into a plurality of partitions, and one partition includes one or more computing units.

The plurality of computing units in the computing system may include a processing core of one or more processors. The one or more processors in embodiments of this application include a homogeneous processor, or may include a heterogeneous processor.

Each partition in the computing system corresponds to one partition criticality. The partition criticality is a proportion of a processing core whose value of core criticality is greater than a first threshold in core criticalities of a plurality of processing cores in one partition, in other words, the partition criticality is a proportion of a processing core whose value of core criticality is relatively high (the value of the core criticality is greater than the first threshold) in a plurality of processing cores in one partition.

Refer to the foregoing descriptions of the bisection formula of the task criticality. Assuming that the core criticality is also defined by using a bisection formula, to be specific, the core criticality includes a high core criticality (*C_{core}*=1) and a low core criticality (*C_{core}*=0), the partition criticality *Cₚₐᵣₜᵢₜᵢₒₙ* may be determined by using the following formula: ${C}_{partition} = \frac{{\sum }_{i = 1}^{n} {C}_{core _ i}}{n}$

*n* represents a total quantity of processing cores in one partition, and *C_{core_i}* represents a core criticality of an *i*^{th} processing core.

It should be understood that the partition criticality indicates a latency tolerance of a computing unit in one partition for a to-be-scheduled task. A higher partition criticality indicates a lower latency tolerance of the computing unit in the partition for the to-be-scheduled task, and a lower partition criticality indicates a higher latency tolerance of the computing unit in the partition for the to-be-scheduled task.

### 5. Task dependency graph (task dependency graph, TDG)

The task dependency graph is a representation form that can be for representing a relationship between tasks. A task dependency path may be determined by using the task dependency graph, and the task dependency path can indicate a dependency between tasks.

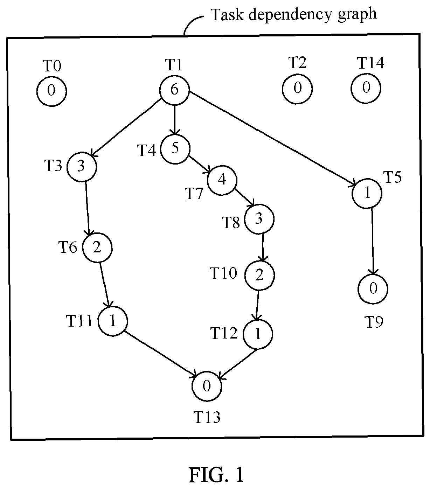

Generally, when tasks are generated, a task dependency graph may be generated. It should be understood that not all computing systems have a task dependency graph. Refer to FIG. 1. Tasks included in a task dependency graph shown in FIG. 1 are respectively T0 to T13, and the task dependency graph includes three task dependency paths:
path 1: T1→T3→T6→T11→T13;
path 2: T1→T4→T7→T8→T10→T12→T13; and
path 3: T1→T5→T9.

Refer to FIG. 1. In the path 1, T3 depends on T1, T6 depends on T3, T11 depends on T6, and T13 depends on T11. In the path 2, T4 depends on T1, T7 depends on T4, T8 depends on T7, T10 depends on T8, T12 depends on T10, and T13 depends on T12. In the path 3, T5 depends on T1, and T9 depends on T5.

It should be noted that T0, T2, and T4 in FIG. 1 are independent tasks and do not depend on other tasks.

With development of big data, architectures of computing systems such as an embedded computing system, an edge computing system, a cluster computing system of a data center, a high-performance computing (high-performance computing, HPC) supercomputing system, and cloud computing are increasingly complex. High-density interconnection, multi-core, many-core, and heterogeneous-core are referred to as mainstream architectures of the computing systems. Task scheduling on these computing systems faces many challenges.

A task scheduling method is as follows: One scheduler (master scheduler) performs global task scheduling on a computing system. The scheduler needs to collect indicators such as a running status and bandwidth of a processor (worker) through some interfaces, analyze the indicators, and perform the task scheduling based on an analysis result. In the task scheduling method, because the indicators need to be collected, overheads of the task scheduling are high. In addition, in a large-scale computing system, overheads of the scheduler are higher. In addition, the scheduler may be overloaded, causing a problem of low scheduling efficiency, unbalanced task scheduling, and low resource utilization.

Another task scheduling method is as follows: An instruction-level scheduler (for example, a thread bundle scheduler) originally included in a processor in a computing system performs parallel scheduling. The scheduling method is a static scheduling method, and needs to depend on prior knowledge of task behavior (for example, consumption of a processing core, task running time, and memory access behavior), and the static scheduling method is not suitable for an irregular task.

Still another task scheduling method is distributed task scheduling, for example, distributed scheduling based on a message passing interface (message passing interface, MPI). The distributed scheduling method is a coarse-grained scheduling method. A scheduling granularity of the task scheduling method is an application (in other words, application-level task scheduling is performed), and there is a problem of task scheduling imbalance (namely, load imbalance). Consequently, resource utilization of a computing system is not high.

For the foregoing problems, embodiments of this application provide a task scheduling method. A plurality of computing units of a computing system are divided into a plurality of partitions, and one partition scheduler is configured for each partition. The partition scheduler is configured to schedule a task in the partition. Each partition includes a plurality of task queues that are of different priorities and that are configured based on task criticalities. The task criticality is determined based on a latency tolerance of a computing unit for a task that is run by the computing unit. In the method, when it is determined, based on a partition criticality of each partition, that inter-partition task scheduling needs to be initiated, a second partition scheduler (a partition scheduler of a second partition) in the plurality of partition schedulers may schedule a first task in a first task queue in a first partition to a computing unit in the second partition, and the computing unit in the second partition executes the first task in the first partition. In addition, a first partition scheduler (a partition scheduler of the first partition) may schedule a task in a second task queue in the second partition to a computing unit in the first partition, and the computing unit in the first partition executes the second task in the second partition. In this way, balanced task scheduling of the entire computing system can be implemented (that is, load balance is achieved), and resource utilization of the computing system can be improved.

Further, in embodiments of this application, the plurality of computing units of the computing system are partitioned, and parallel task scheduling is performed on the plurality of partitions. In addition, the partition scheduler is configured for each partition to perform intra-partition task self-scheduling for each partition, to implement fine-grained task scheduling. For different partitions, the inter-partition task scheduling is performed, if necessary, to implement coarse-grained task scheduling. It can be learned that, in the task scheduling method provided in embodiments of this application, both the fine-grained task scheduling and the coarse-grained task scheduling can be considered, and a scheduling effect is good.

The task scheduling method provided in embodiments of this application is applied to a computing system. The computing system may be of different scales, for example, may be a small embedded system with a single processor or an ultra-large system with over 10 million cores. For example, the computing system in embodiments of this application may be any one of the following: a processor including a plurality of cores, a server including a plurality of processors (the plurality of processors may be homogeneous processors and/or heterogeneous processors, and the processors may be single-core processors or multi-core processors), a rack including a plurality of servers, a cluster including a plurality of racks, or the like.

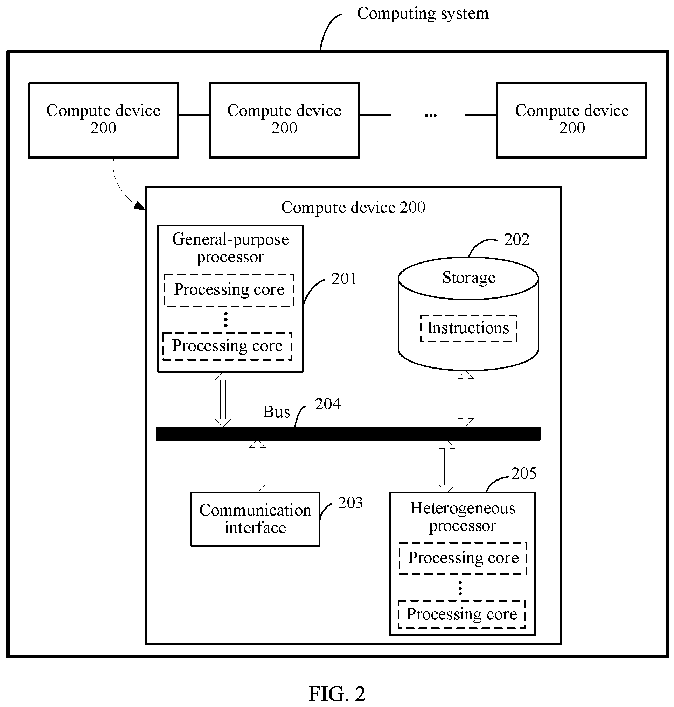

For example, FIG. 2 is a diagram of an architecture of a computing system. As shown in FIG. 2, the computing system includes a plurality of compute devices 200 (namely, compute nodes), and the plurality of compute devices 200 may communicate with each other in a same manner.

The compute device 200 may be a server, for example, a central server, an edge server, or a local server in a local data center. In some embodiments, the compute device 200 may alternatively be a terminal device like a desktop computer, a notebook computer, or a smartphone.

For example, still refer to FIG. 2. The compute device 200 may include one or more processors (for example, a general-purpose processor 201 and a heterogeneous processor 205 shown in FIG. 2), a storage 202, and a communication interface 203. The general-purpose processor 201, the storage 202, the communication interface 203, and the heterogeneous processor 205 may be connected to each other through a bus 204, or may be connected to each other in another manner. Optionally, various components included in the compute device 200 may be implemented in hardware, software, or a combination of hardware and software that includes one or more signal processors and/or application-specific integrated circuits.

The compute device may include one or more general-purpose processors 201. The general-purpose processor 201 is a control center of the compute device 200. The general-purpose processor 201 may be a CPU, or may be another general-purpose processor or the like, for example, may be a microprocessor or any conventional processor. Optionally, the general-purpose processor 201 may include one or more processing cores.

A controller in the general-purpose processor 201 is a nerve center and a command center of the compute device 200. The controller may generate an operation control signal based on an instruction operation code and a time sequence signal, to complete control of instruction reading and instruction execution. Optionally, a storage may be further configured in the general-purpose processor 201, and is configured to store instructions and data.

The heterogeneous processor 205 is a heterogeneous processor relative to the foregoing general-purpose processor 201. The heterogeneous processor 205 may be, for example, a graphics processing unit (graphics processing unit, GPU), a field-programmable gate array (field-programmable gate array, FPGA), or an application-specific integrated circuit (application-specific integrated circuit, ASIC). The heterogeneous processor 205 may include one or more processing cores. Generally, the heterogeneous processor 205 includes a plurality of processing cores.

The storage 202 includes but is not limited to a random access memory (random access memory, RAM), a read-only memory (read-only memory, ROM), an erasable programmable read-only memory (erasable programmable read-only memory, EPROM), a flash memory, an optical memory, a magnetic disk storage medium, another magnetic storage device, or any other medium that can be configured to carry or store expected program code in an instruction form or in a data structure form and that can be accessed by a computer. In this embodiment of this application, the storage 202 may store information such as computer instructions.

In a possible implementation, the storage 202 may be independent of the processor (for example, the general-purpose processor 201 or the heterogeneous processor 205). The storage 202 may be connected to the processor through the bus 204, and is configured to store data, instructions, or program code. When invoking and executing the instructions or the program code stored in the storage, the processor can implement related steps in the method provided in embodiments of this application.

In another possible implementation, the storage 202 may alternatively be integrated with the processor.

The communication interface 203 may be a transceiver module, and is configured to communicate with another device or a communication network, for example, an ethernet, a RAN, or a wireless local area network (wireless local area network, WLAN). The communication interface 203 may receive instructions, a message, data, or the like. The transceiver module may be an apparatus, for example, a transceiver or a transceiver machine. Optionally, the communication interface 203 may alternatively be a transceiver circuit located inside the processor, and is configured to implement signal input and signal output of the processor. The communication interface 203 may be a wired interface (port), for example, a fiber distributed data interface (fiber distributed data interface, FDDI) or a gigabit ethernet (gigabit ethernet, GE) interface, or the communication interface 203 may be a wireless interface.

The bus 204 may be an industry standard architecture (industry standard architecture, ISA) bus, a peripheral component interconnect (peripheral component interconnect, PCI) bus, an extended industry standard architecture (extended industry standard architecture, EISA) bus, or the like. The bus may be classified into an address bus, a data bus, a control bus, and the like. The bus may alternatively be classified into a serial bus or a parallel bus. For ease of representation, only one bold line is used to represent the bus in FIG. 2, but this does not mean that there is only one bus or only one type of bus.

It should be noted that the compute device in FIG. 2 is merely an example of the compute device. The compute device may have more or fewer components than those shown in FIG. 2, may combine two or more components, or may have different component configurations. For example, the compute device may further include an intelligent network interface card, for example, a data processing unit (data processing unit, DPU).

The task scheduling method provided in embodiments of this application is performed by a scheduler. Optionally, the scheduler may be a scheduler in a hardware form, or may be a scheduler in a software form. This is not limited in embodiments of this application.

With reference to the foregoing content, it can be learned that, in the task scheduling method provided in embodiments of this application, a plurality of computing units in a computing system are partitioned, the plurality of computing units in the computing system are divided into a plurality of partitions, and one partition scheduler (which may be referred to as an L1 scheduler) is configured for each partition. The partition scheduler has a fully autonomous scheduling authority for compute resources in the partition, and is configured to perform intra-partition task self-scheduling. The computing unit includes a processing core of one or more processors. In the computing system, the plurality of processing cores may be homogeneous processing cores and/or heterogeneous processing cores. Optionally, in some cases, for example, when a quantity of processing cores in the computing system (for example, a multi-core computing system) is large and a quantity of divided partitions is large, an upper-level federation scheduler (which may be referred to as an L2 scheduler) may be configured based on the partition scheduler. The federation scheduler is configured to manage a plurality of partition schedulers, and the L2 scheduler performs task scheduling (namely, bilateral peer-to-peer scheduling) between two partitions based on a balance status of the plurality of partitions. When the quantity of processing cores in the computing system (for example, a many-core computing system) is extremely large, a federation scheduler (which may be referred to as an L3 scheduler) may be further configured at an upper level of the L2 scheduler.

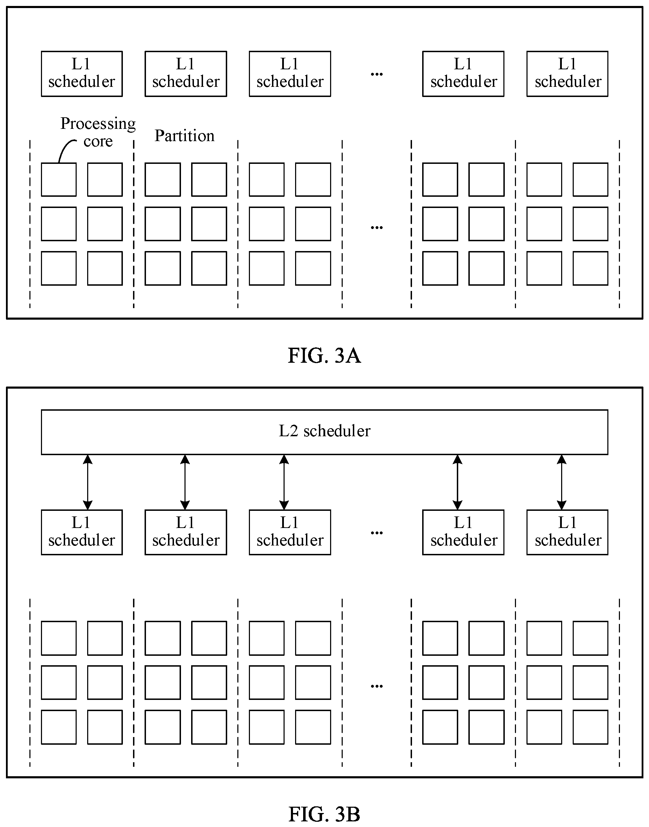

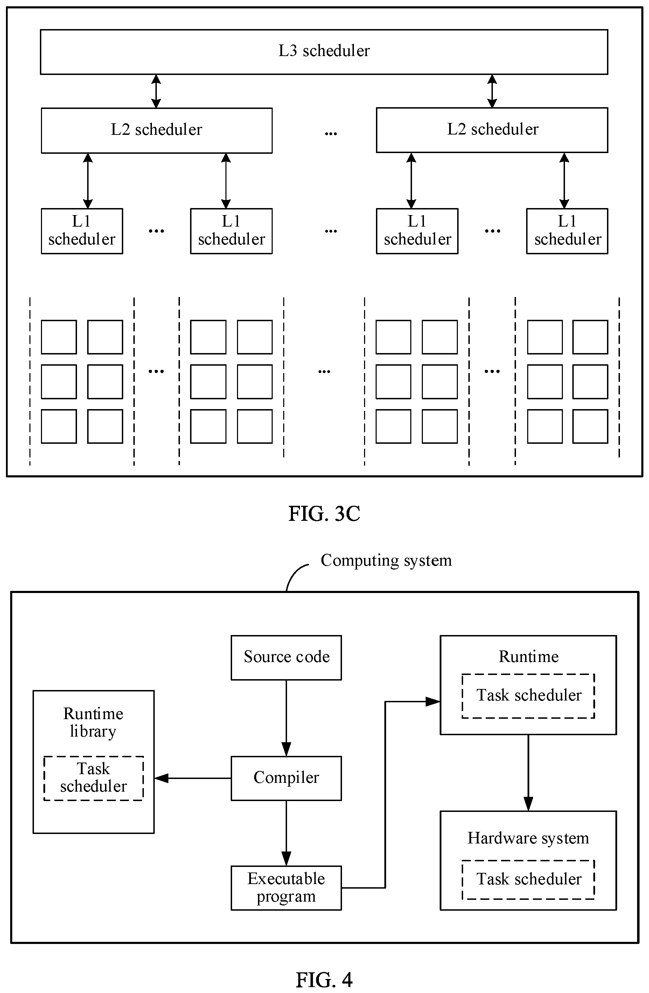

For example, refer to FIG. 3A. In the computing system, six computing units may be divided into one partition, and each partition corresponds to one L1 scheduler. Refer to FIG. 3B. Six computing units are divided into one partition, and each partition corresponds to one L1 scheduler. Further, when a quantity of partitions in the computing system is large, a quantity of L1 schedulers is also large. In this case, the plurality of L1 schedulers may be cascaded to one L2 scheduler, and the L2 scheduler manages the plurality of L1 schedulers. Refer to FIG. 3C. When a quantity of partitions in the computing system is extremely large, a plurality of L1 schedulers may be divided into a plurality of groups, and each group of L1 schedulers is cascaded to one L2 scheduler. In this case, there are a plurality of L2 schedulers in the computing system. When a quantity of L2 schedulers is large, the plurality of L2 schedulers are cascaded to one L3 scheduler, and the L3 scheduler manages the plurality of L2 schedulers.

Optionally, a proper quantity of L1 schedulers are configured based on a scale of the computing system and an actual requirement, and whether to cascade an L2 scheduler and an L3 scheduler is selected. Certainly, as the scale of the computing system increases, one or more levels of schedulers may be further cascaded above the L3 scheduler. Specifically, the scheduler is configured based on the actual requirement. This is not limited in embodiments of this application.

With reference to FIG. 3A to FIG. 3B, it can be learned that the L1 scheduler schedules a task in each partition based on a task criticality of the task in the partition, to implement intra-partition self-scheduling (namely, partition autonomy). The intra-partition self-scheduling is a fine-grained task scheduling policy. The L2 manages the plurality of L1 schedulers, and initiates inter-partition task scheduling (namely, bilateral peer-to-peer scheduling) between two partitions when a difference between partition criticalities reported by the L1 scheduler is large. When the L3 scheduler is configured, the plurality of L2 schedulers further report a plurality of domain criticalities to the L3 scheduler (the domain criticality is a criticality obtained by each L2 scheduler by performing a correlation operation on a plurality of partition criticalities collected by the L2 scheduler, referred to as a domain criticality, which may also be understood as that a plurality of partitions are grouped into one domain). When determining that a difference between the domain criticalities is large, the L3 scheduler determines to initiate inter-domain task scheduling between two domains (the inter-domain task scheduling herein is essentially inter-partition task scheduling too). A detailed process of the scheduling method is described in the following embodiments.

Refer to a diagram of an architecture of a computing system (including a hardware system and a software system of the computing system) shown in FIG. 4. In a possible implementation, when the foregoing scheduler is in a software form, the scheduler may be deployed in a runtime software system in FIG. 4. It may be understood that runtime is an environment needed in an execution process of a program, and the runtime may also be referred to as a runtime environment or an execution environment.

The runtime software system may include a runtime host system and an application runtime system (the application runtime system is an environment in which an application program runs). Optionally, the scheduler may be deployed in a host system in a runtime system, and the scheduler may be a scheduling application program, so that the scheduling application program may be loaded in a runtime service manner.

In a possible implementation, when the foregoing scheduler is in a software form, the scheduler may be deployed in a runtime library software module in FIG. 4. It may be understood that a runtime library is a library file needed when a program is running, and the runtime library usually includes a function commonly used during programming, for example, a character string operation, a file operation, and an interface. The runtime library may provide an API that invokes and integrates the scheduler. An application developer may implement a function of the scheduler by explicitly invoking the API, or a compiler may automatically integrate the scheduler in a linking phase.

In a possible implementation, when the foregoing scheduler is in a hardware form, the scheduler may be deployed on the processing core in the computing system. In embodiments of this application, the scheduler is deployed locally (deployed on a same server) to the greatest extent. In this way, bandwidth consumption in a task scheduling process can be reduced, and task scheduling efficiency can be improved.

The following separately describes possible deployment modes of various schedulers for several computing systems of different scales by using examples.

### 1. Single-processor computing system including a plurality of processing cores

In a single-processor computing system with a plurality of processing cores, during partitioning, the processing cores are partitioned at a granularity of a computing unit. One partition includes one or more processing cores.

In an implementation, an L1 scheduler of each partition may be deployed on any processing core in the partition. When a quantity of partitions is large, at least one L2 scheduler may be further deployed, and the at least one L2 scheduler may be deployed on any one or more processing cores of the processor. In this deployment mode, the scheduler can be more closely integrated with the plurality of cores, so that task scheduling efficiency is higher.

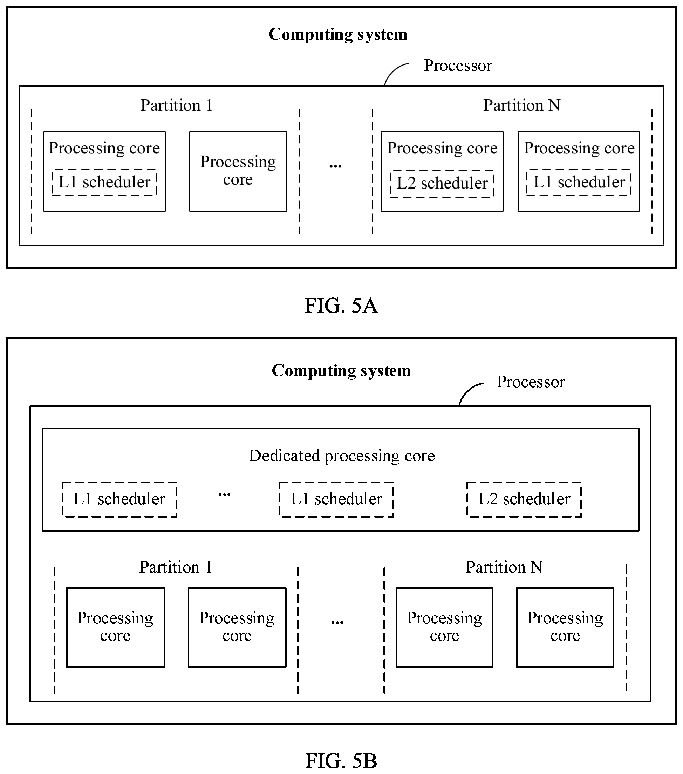

For example, assuming that each partition includes two processing cores, for each partition, the L1 scheduler may be integrated into any processing core in the partition. FIG. 5A shows a deployment example of L1 schedulers corresponding to partitions and a deployment example of an L2 scheduler (it is assumed that only one L2 scheduler is deployed in the computing system).

In another implementation, an L1 scheduler of each partition may be deployed on a dedicated processing core. To be specific, a dedicated processing core outside the partition is defined in a processor to deploy a scheduler, and a partition scheduler of each partition is deployed on the dedicated processing core. When a quantity of partitions in the computing system is large, an L2 scheduler may be further deployed on the dedicated processing core. In this deployment mode, a process in which the scheduler performs task scheduling does not occupy compute resources of a processing core in the partition, thereby facilitating smooth execution of a task. In addition, the L1 scheduler and the L2 scheduler are located in the same processor, and processing cores in the same processor are encapsulated together. A task scheduling process is intra-chip interaction, and task scheduling efficiency is high. FIG. 5B shows a deployment example of L1 schedulers corresponding to partitions and a deployment example of an L2 scheduler (it is assumed that only one L2 scheduler is deployed in the computing system).

It may be understood that, generally, an L3 scheduler or an upper-level scheduler does not need to be deployed in a small computing system with a single core and a plurality of processors.

### 2. Single-server computing system including a plurality of processors

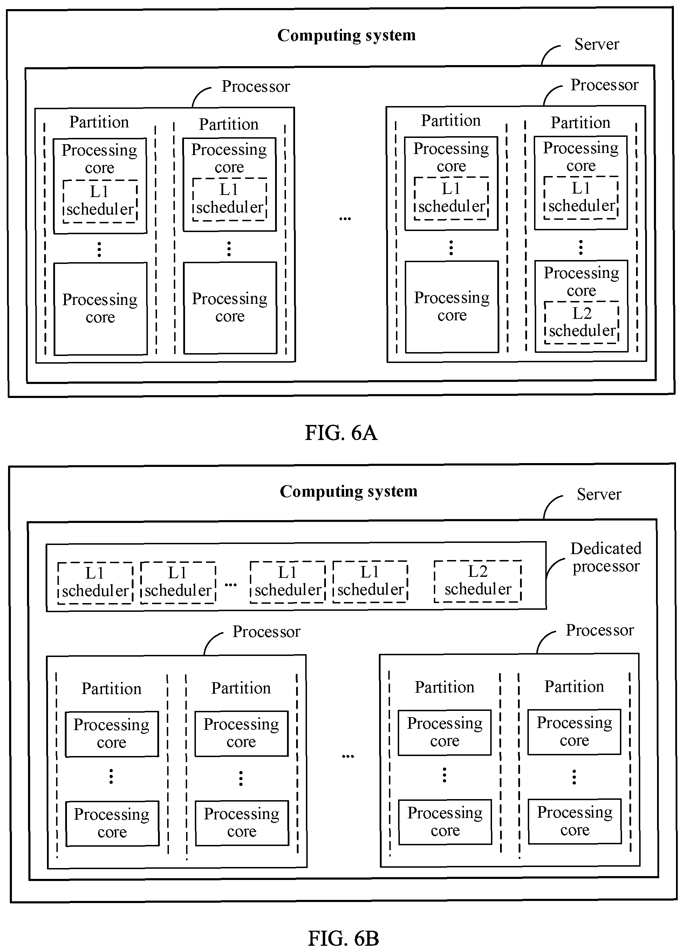

In an implementation, in a single-server computing system with a plurality of processors, a deployment mode of an L1 scheduler may be similar to the deployment mode in the foregoing single-processor computing system with a plurality of processing cores, that is, the L1 scheduler is deployed on any processing core in each partition. A deployment mode of an L2 scheduler may be similar to the deployment mode in the foregoing single-processor computing system with a plurality of processing cores, and at least one L2 scheduler is deployed on any processing core of any one or more of the plurality of processors. In this deployment mode, the L1 scheduler and L2 scheduler are deployed on a same server, and task scheduling efficiency is high. FIG. 6A shows a deployment example of L1 schedulers corresponding to partitions and a deployment example of an L2 scheduler (it is assumed that only one L2 scheduler is deployed in the computing system).

In another implementation, an L1 scheduler of each partition may be deployed on a dedicated processor or a dedicated processing core, at least one L2 scheduler may further be deployed, and the at least one L2 scheduler may also be deployed on the dedicated processor or the dedicated processing core. FIG. 6B shows a deployment example of L1 schedulers corresponding to partitions and a deployment example of an L2 scheduler (it is assumed that only one L2 scheduler is deployed in the computing system).

### 3. Single-rack (Rack) computing system including a plurality of servers

Similarly, in an implementation, in a single-rack computing system with a plurality of servers, a deployment mode of an L1 scheduler may be similar to the deployment mode in the foregoing single-processor computing system with a plurality of processing cores, that is, the L1 scheduler is deployed on any processing core in each partition. A plurality of L1 schedulers and an L2 scheduler corresponding to the plurality of L1 schedulers are deployed on a same server to the greatest extent, for example, deployed on any one or more processing cores of any one or more processors of the same server, to avoid inter-server scheduling during inter-partition scheduling, thereby improving task scheduling efficiency.

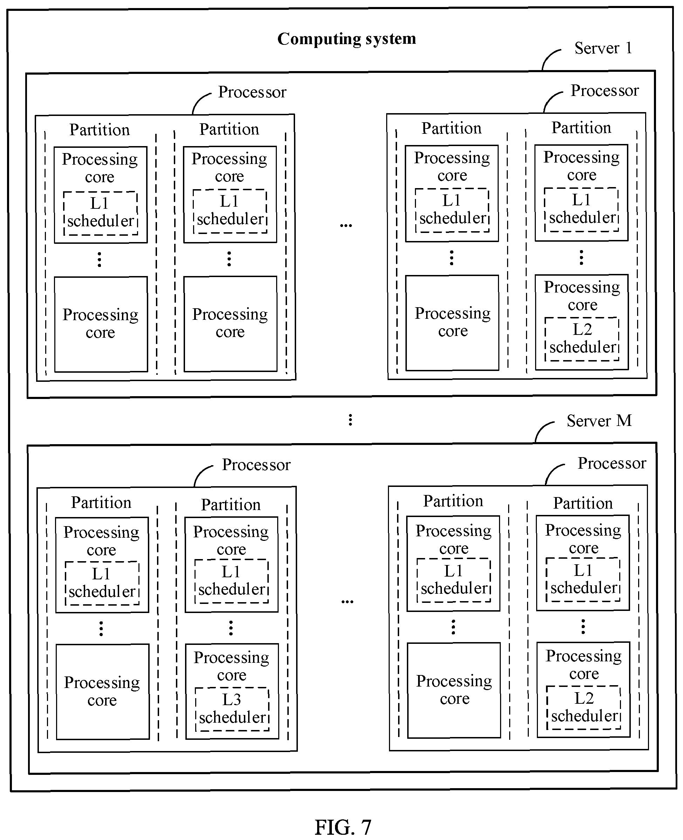

Optionally, in the single-rack computing system with a plurality of servers, when a quantity of L2 schedulers is large, an L3 scheduler may be further deployed. When a plurality of L2 schedulers are deployed on a same server, the plurality of L2 schedulers and an L3 scheduler corresponding to the plurality of L2 schedulers may also be deployed on the same server to the greatest extent, to avoid inter-server scheduling. If only one L3 scheduler is deployed in the computing system, the L3 scheduler may be deployed on any processing core of any processor in any server. FIG. 7 shows a deployment example of L1 schedulers corresponding to partitions, a deployment example of L2 schedulers, and a deployment example of an L3 scheduler (it is assumed that only one L3 scheduler is deployed in the computing system, and one L2 scheduler is deployed on each server).

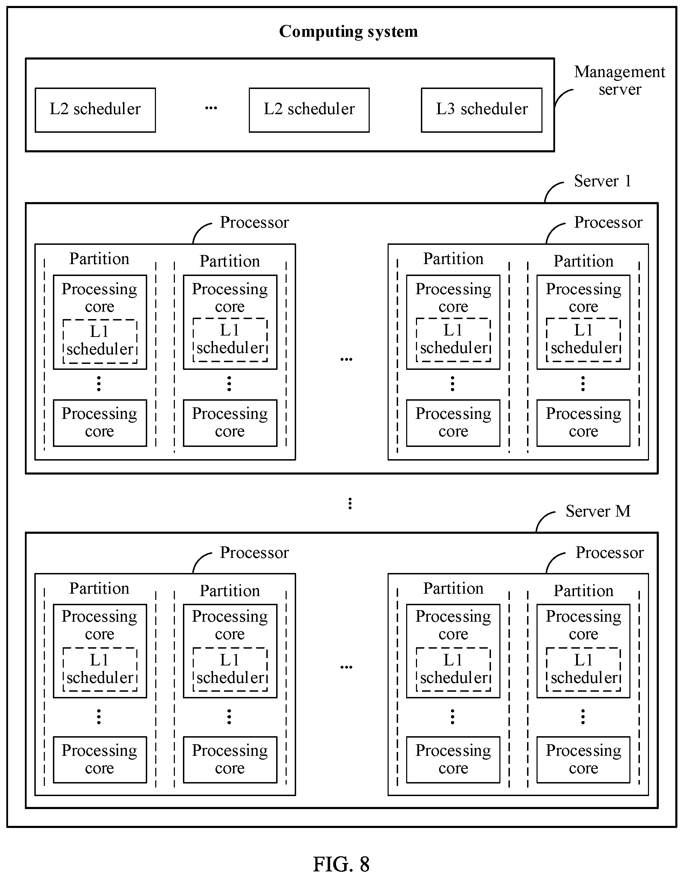

In another implementation, in some cases, for example, when an L1 scheduler and an L2 scheduler and an L3 scheduler that correspond to the L1 scheduler cannot be deployed on a same server, and the computing system includes a management server, the L2 scheduler and the L3 scheduler may be deployed on the management server. FIG. 8 shows a deployment example of L2 schedulers and a deployment example of an L3 scheduler (it is assumed that only one L3 scheduler is deployed in the computing system).

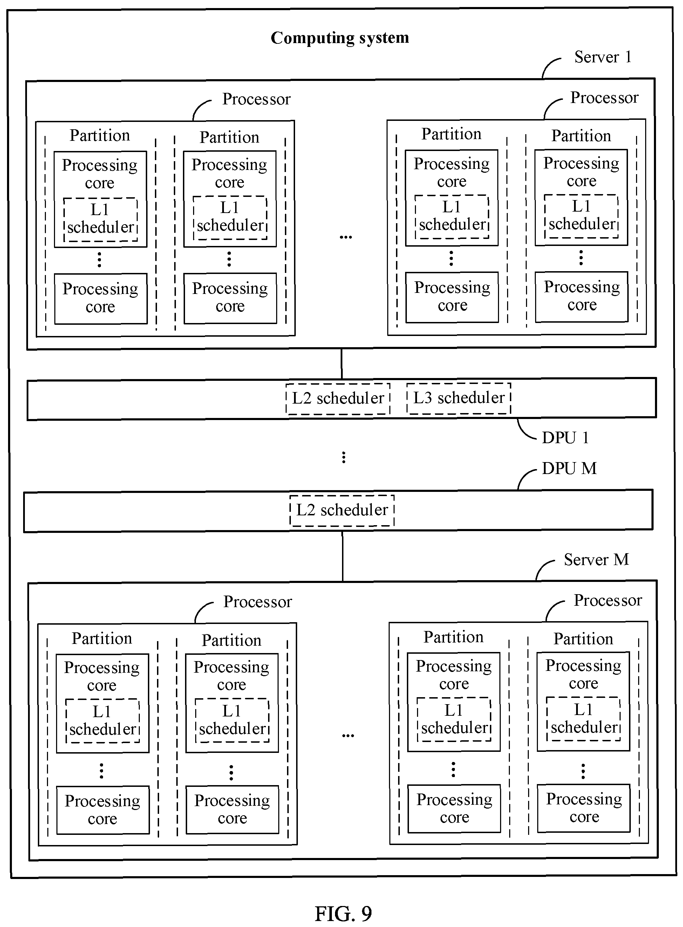

In still another implementation, when each server has a DPU network interface card, an L2 scheduler or an L3 scheduler may alternatively be deployed on a processing core of the DPU network interface card, and task scheduling can be fully accelerated by using DPU computational power. In this way, resources of a processing core of the server can be saved. FIG. 9 shows a deployment example of L2 schedulers and a deployment example of an L3 scheduler (it is assumed that only one L3 scheduler is deployed in the computing system).

It may be understood that, generally, an L3 scheduler or an upper-level scheduler does not need to be deployed in a single-server computing system with a plurality of processors either.

Based on the foregoing descriptions of the technical terms, the system architecture, and the like, the following describes in detail the task scheduling method provided in embodiments of this application. It may be understood that embodiments of this application propose a policy of partitioning computing units in a computing system. Based on this, task scheduling includes partition task self-scheduling and inter-partition task scheduling.

A plurality of computing units in a computing system include a processing core of one or more processors. The plurality of processors include a heterogeneous first processor and/or a heterogeneous second processor. The first processor may be, for example, the general-purpose processor 201 in FIG. 2, and the second processor may be, for example, the heterogeneous processor 205 in FIG. 2.

For example, in a homogeneous multi-core computing system (homogeneous means that the computing system includes one type of processor, for example, includes only a CPU), it is assumed that 48 cores in a server including four 48-core CPUs are divided into eight partitions: {P0, P1, ..., and P7}, and each partition includes 24 processing cores.

For another example, in a heterogeneous multi-core computing system (heterogeneous means that the computing system includes at least two different types of processors, for example, includes a CPU and a GPU), it is assumed that cores of processors in a server including one heterogeneous processor of one 48-core CPU and four 128-core GPUs are divided into 10 partitions: {P0, P1, ..., and P9}. The 48-core CPU is divided into two partitions, and each partition includes 24 processing cores. The four 128-core GPUs are divided into eight partitions, and each partition includes 64 processing cores.

Optionally, in embodiments of this application, a partition vector may be used to identify a partition. A partition vector of a partition may be represented as a vector P, where P = (n, p, t, e0, e1, ...). A dimension of the partition vector is not limited in embodiments of this application. Partition vectors of a plurality of partitions of the computing system may form a matrix. Meanings represented by elements in the partition vector are shown in the following Table 1.

**Table 1**

| Elements in the partition vector | Meaning |
|---|---|
| n | Compute node index (node ID), which is a number of a compute node in the computing system and ranges from 0 to n |
| p | Processor index (processor ID), which is a number of a processor in one compute node and ranges from 0 to p |
| t | Processor type index, which is used to distinguish between different types of processors such as a CPU, a GPU, and an NPU |
| e0 | Extended index, which is selected based on an actual requirement |
| e1 | |
| ... | |

For the processor index, in some cases, in some computing systems, for example, a computing system of a big.LITTLR architecture, one processor includes a big core and a little core, and a same processor may be classified into two different types based on characteristics of cores. Alternatively, logically, one processor may further be virtualized into two different types of processors. For example, a CPU may be classified into different types depending on whether the CPU has a vector extension capability or a matrix extension capability.

A quantity of extended indexes may be increased based on an actual requirement. For example, e0 may generally indicate a group index of a processing core in a multi-core processor. The extended index may further include an index indicating a task timeout coefficient, a queue idle coefficient, and the like.

Topology information of the computing system may be learned of based on multidimensional indexes in the partition vector, so that task routing of the entire computing system is determined, and task routing information is provided during inter-partition task scheduling, to implement nearby bilateral scheduling. For example, inter-partition scheduling between two partitions is performed in a same server and a same rack to the greatest extent, to reduce peer-to-peer scheduling between two partitions across servers and racks, so that overheads caused by inter-node scheduling can be reduced. In some actual applications, the partition vector may be provided for a developer to explicitly invoke resources. Because the partition vector includes the compute node index and the processor type index, the partition vector may be directly used for invoking of heterogeneous programming and distributed programming.

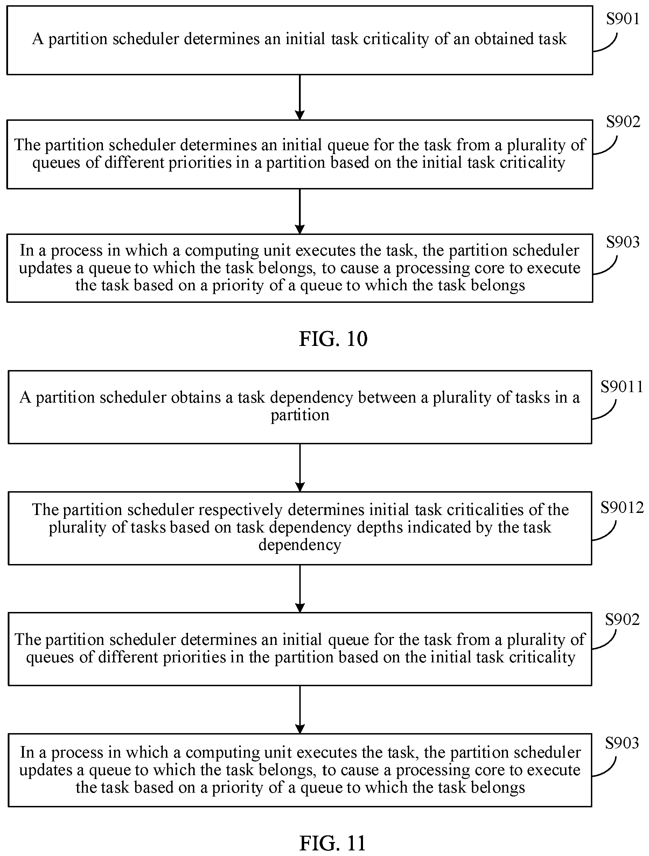

With reference to FIG. 3A, methods for performing intra-partition task scheduling for all of the plurality of partitions in the computing system are the same. In the following embodiments, an intra-partition task scheduling process is described by using one partition as an example. A main idea of the intra-partition task scheduling is: performing task scheduling based on a task criticality of a task in a partition and a multi-level queue scheduling policy. As shown in FIG. 10, the task scheduling method provided in embodiments of this application includes S901 to S903.

S901: A partition scheduler determines an initial task criticality of an obtained task.

It may be understood that a processing core in a partition has a plurality of to-be-processed tasks. After obtaining each task at the beginning, the scheduler determines a task criticality in an initial state (namely, an initial task criticality) for the task. In a task processing process, the task criticality of each task may dynamically change.

For detailed descriptions of the task criticality and how to determine the task criticality, refer to content in the foregoing technical term part. Details are not described herein again.

With reference to FIG. 10, as shown in FIG. 11, in an implementation, a method for determining, by the partition scheduler, the initial task criticality of the task (one or more tasks) includes S9011 and S9012.

S9011: The partition scheduler obtains a task dependency between the plurality of tasks in the partition.

In this embodiment of this application, the task dependency between the tasks may be learned of by using a task dependency graph of the computing system. A task dependency path is obtained by using the task dependency graph. Specific tasks that have a dependency with each other, how the tasks depend on each other, and a task dependency depth may be learned of based on the task dependency path. For descriptions of the task dependency graph, refer to FIG. 1 and descriptions of related technical terms.

S9012: The partition scheduler respectively determines initial task criticalities of the plurality of tasks based on task dependency depths indicated by the task dependency.

A task dependency depth may be understood as a location of a task in a task dependency path to which the task belongs (one task may belong to a plurality of task dependency paths).

For example, refer to the task dependency graph shown in FIG. 1. In the three task dependency paths, T1 is located in the path 1 (T1→T3→T6→T11→T13), the path 2 (T1→T4→T7→T8→T10→T12→T13), and the path 3 (T1→T5→T9). A task dependency depth of T1 in the path 1 is 4, a task dependency depth of T1 in the path 2 is 6, and a task dependency depth of T1 in the path 3 is 2.

Specifically, a process of respectively determining the initial task criticalities of the plurality of tasks based on the task dependency depths is as follows:

First, the task dependency graph is analyzed to obtain an attribute parameter of the task, where the attribute parameter of the task is a task dependency depth; and a maximum value of a path depth in a dependency path in which the task is located is determined by using a bottom-level (bottom-level, BL) algorithm. For example, T1 is located in different task dependency paths, and the task dependency paths are 4, 6, and 2 respectively. In this case, the task dependency depth 6 of T1 should be selected to determine an initial task criticality of T1. It may be understood that a value in a circle corresponding to each task in FIG. 1 is a determined task dependency depth.

Then, an initial task criticality of the task is determined based on the maximum value of the task dependency depth.

In an implementation, assuming that the initial task criticality of the task is also determined by using a bisection formula, the initial task criticality (*Cₚ*) may be: ${C}_{p} = \left\{\begin{matrix}1 , Dpath \geq first threshold \\ 0 , Dpath < second threshold\end{matrix}\right.$

Dpath is the maximum value of the task dependency depth of the task. When the maximum value of the task dependency depth is greater than or equal to a second threshold, the initial task criticality is 1 (high task criticality). When the maximum value of the task dependency depth is less than the second threshold, the initial task criticality is 0 (low task criticality).

In conclusion, in this embodiment of this application, the initial task criticality may be set for the task based on the task dependency graph, and the initial task criticality is a static value determined when the task is generated.

In an implementation, when a task dependency of a task cannot be obtained (the computing system has no task dependency graph or learns, based on a dependency graph, that the task is an independent task and does not depend on another task), an initial task criticality of the task is set to a lowest task criticality, that is, the task is considered as a low-latency task (for example, a compute task) by default. For example, refer to descriptions of the concept of the task criticality in the foregoing embodiment. When a value of the task criticality is determined by using the bisection formula, that is, the task criticality includes 0 and 1, a task criticality of a new task may be set to the low task criticality 0. Refer to FIG. 1. T0, T2, and T4 in FIG. 1 are independent tasks. Therefore, initial task criticalities of T0, T2, and T4 may all be set to 0.

S902: The partition scheduler determines an initial queue for the task from a plurality of queues of different priorities in the partition based on the initial task criticality.

In this embodiment of this application, a plurality of task queues of different priorities are configured for each partition. In a task running process, a processing core executes tasks in all the queues in descending order of priorities. For tasks in a same queue, the processing core runs the tasks by using a round robin (round robin) policy.

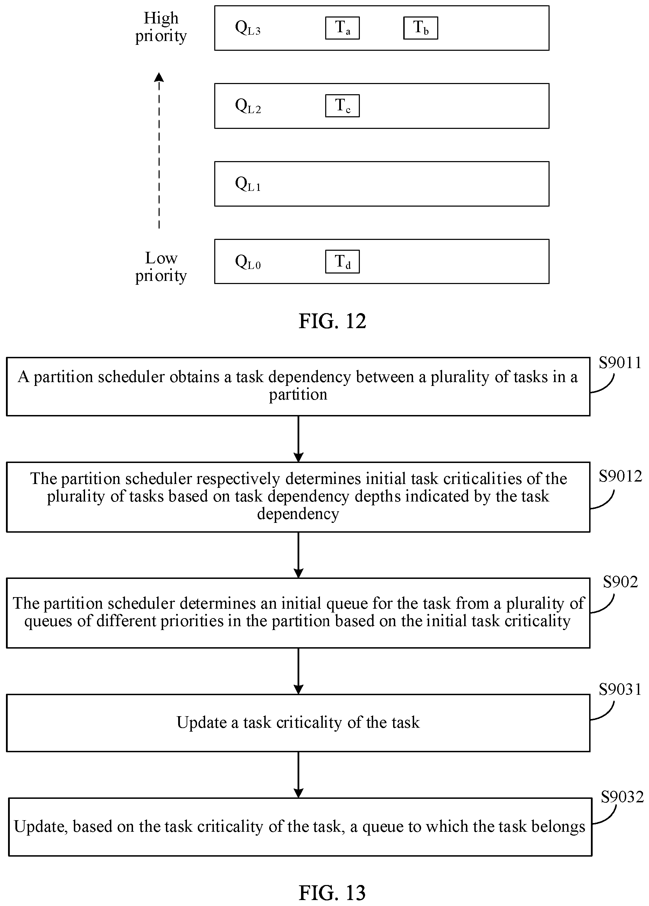

For example, refer to task queues shown in FIG. 12. Each partition may include four task queues of different priorities: Q_{L0}, Q_{L1}, Q_{L2}, and Q_{L3}. The priorities of the queues are in ascending order. Tasks in the queue Q_{L3} include Tₐ and T_{b}, a task in the queue Q_{L2} is T_{c}, and a task in the queue Q_{L0} is T_{d}. Based on the priorities of the task queues, during task execution, the tasks in the queue Q_{L3} with the highest priority are executed first. For Tₐ and T_{b} in the queue Q_{L3}, a round robin scheduling policy is used. To be specific, Tₐ is executed, T_{b} is executed after a time slice allocated to Tₐ is completely consumed, and Tₐ or another task in the queue is executed after a time slice allocated to T_{b} is completely consumed. Then, T_{c} in the queue Q_{L2} is executed. Finally, T_{d} in the queue Q_{L0} is executed.

In this embodiment of this application, time slices of the processing core are dynamically allocated, in descending order of the queue priorities, to the tasks for use. Different task queues correspond to different quantities of time slices, and the quantity of time slices corresponding to the task queue decreases as the priority of the task queue increases. Optionally, a multiple relationship is maintained between quantities of time slices corresponding to the plurality of task queues of different priorities.

For example, refer to the task queues of the four priorities shown in FIG. 12, quantities of time slices respectively corresponding to the four task queues are denoted as Quantum_Q_{L0}, Quantum_Q_{L1}, Quantum_Q_{L2} and Quantum_Q_{L3}, and a relationship between the quantities of time slices corresponding to the four task queues satisfies Quantum_Q_{L3} < Quantum_Q_{L2} < Quantum_Q_{L1} < Quantum_Q_{L0}.

In this embodiment of this application, the tasks are placed in the task queues of different priorities based on the task criticalities. In other words, the task criticalities of the tasks are used to determine task queues to which the tasks belong (a queue or a task queue in the following embodiments refers to a queue of a task and represents a same concept). It may also be understood as that the tasks in the task queues of different priorities have different processing priorities, the priorities of the tasks are related to the task criticalities of the tasks, and tasks in a same task queue have a same task processing priority.

It should be understood that, as the task criticality increases, the priority of the task queue to which the task belongs increases. To be specific, when the task criticality of the task increases, the task is moved to a queue with a higher priority; or when the task criticality of the task decreases, the task is moved to a queue with a lower priority.

In an implementation, there may be a correspondence between the task criticality of the task and the priority of the task queue. For example, there are four levels of task criticalities and four task queues of different priorities. In this case, the task is classified, based on the correspondence between the task criticality and the priority, into a task queue corresponding to the task criticality.

In another implementation, if the task criticality is in a binarization form (to be specific, the foregoing high task criticality 1 and low task criticality 0), when a new task is obtained, the task is classified into a corresponding queue based on an initial task criticality. When the initial task criticality is the high task criticality 1, the task is classified into a task queue with a highest priority (for example, the foregoing Quantum_Q_{L3}). When the initial task criticality is the low task criticality 0, the task is classified into a task queue with a lowest priority (for example, the foregoing Quantum_Q_{L0}).

Optionally, in this embodiment of this application, tasks in a task queue may be tasks of a same application, or may be tasks of a plurality of applications. This is not specifically limited.

With reference to the foregoing descriptions of the task criticality, the task queue, and the time slice, it can be learned that a higher priority of a task queue indicates a smaller quantity of time slices corresponding to the queue, a higher task criticality of a task in the queue, and a lower latency tolerance of a processing core for a task.

S903: In a process in which the computing unit executes the task, the partition scheduler updates a queue to which the task belongs, to cause the processing core to execute the task based on a priority of a queue to which the task belongs.

In this embodiment of this application, in a task scheduling process, the task criticality of the task may change with an execution status of the task. For example, if a task consumes a relatively large quantity of time slices at a previous moment (in a computing state), but the task consumes a relatively small quantity of time slices at a current moment (in a memory access state), a task criticality of the task increases. For another example, if a task consumes a relatively small quantity of time slices at a previous moment (in a memory access state), but the task consumes a relatively large quantity of time slices at a current moment (in a computing state), a task criticality of the task decreases.

In an implementation, with reference to FIG. 10, as shown in FIG. 13, a process in which the partition scheduler updates the queue to which the task belongs includes S9031 and S9032.

S9031: Update the task criticality of the task.

It may be understood that, in a task running process, the criticality of the task may change. For example, the task may be switched between a memory access operation and a computing operation. The task criticality of the task is determined based on a time slice consumed by the task and waiting time of the processing core, in other words, is determined based on a latency tolerance of the processing core for a task.

S9032: Update, based on the task criticality of the task, the queue to which the task belongs.

In this embodiment of this application, whether to perform queue switching on the task is determined based on the task criticality. One task is used as an example. When a task criticality of the task increases, the partition scheduler moves the task from the current queue to a queue whose priority is higher than a priority of the current queue. When the task criticality of the task decreases, the partition scheduler moves the task from the current queue to a queue whose priority is lower than the priority of the current queue.

In some embodiments, the task is associated with an ID of an initially allocated processing core, and a time slice of the same processing core is preferentially allocated to the task. When memory access is initiated because a cache miss occurs in the task, latency of the task increases, causing the task criticality to increase. In this case, the task is moved to a high-priority queue and is preferentially scheduled for running.

Optionally, when the task criticality increases, the task is moved level by level to a task queue with a high priority; or when the task criticality decreases, the task is moved level by level to a task queue with a low priority. For example, a task is currently located in the queue Q_{L1}. If a task criticality of the task increases, the task is moved from the queue Q_{L1} to the queue Q_{L2}. In a task execution process, if the task criticality of the task subsequently continues to increase, the task is further moved from Q_{L2} to the queue Q_{L3}.

In another implementation, updating the queue to which the task belongs may include the following several cases.

Case 1: When a time slice corresponding to the task is completely consumed and running of the task does not end, the partition scheduler moves the task from the current queue to a queue whose priority is lower than a priority of the current queue.

In this embodiment of this application, if the time slice corresponding to the task has been completely consumed, but the running of the task does not end, it indicates that compute resources needed for running the task are insufficient. Because a low-priority queue corresponds to a large quantity of time slices, the task is moved from the current queue to a queue whose priority is lower than the priority of the current queue, so that more compute resources can be obtained for the task. In this way, quick running of the task can be ensured, and task scheduling efficiency is improved. Further, switching the task between the queues in the partition based on a running status of the task can improve overall resource utilization of the processing core in the partition.

Case 2: When waiting timeout of the task is severe, the partition scheduler moves the task from the current queue to a queue whose priority is higher than a priority of the current queue.

In this embodiment of this application, when waiting timeout of a task in a low-priority queue occurs, it indicates that compute resources (namely, a time slice) cannot be allocated to the task in the low-priority queue in time, and a starvation phenomenon occurs. The task is moved from the current queue to a queue whose priority is higher than the priority of the current queue. In this way, the timeout of the task in the partition can be alleviated, so that the task can be run smoothly. Further, switching the task between the queues in the partition based on a running status of the task can improve resource utilization of the processing core in the partition.

Case 3: When a time slice corresponding to the task queue is not completely consumed and the processing core that executes the task is released, the queue to which the task belongs remains unchanged.

An intra-partition task scheduling process described in S901 to S903 is a task criticality-based dynamic scheduling process. The partition scheduler of each partition performs task self-scheduling on the partition, and performs scheduling based on the task criticality of the task in the partition. A scheduling granularity is finer, so that balanced intra-partition task scheduling is implemented, and the resource utilization of the processing core in the partition can be improved. In addition, for each task, overheads needed for obtaining the task criticality are low, and scheduling overheads needed for the task scheduling can be significantly reduced.

Further, in comparison with a static scheduling method, in this embodiment of this application, queue update is performed based on the task criticality without depending on prior knowledge and without needing profiling performance for data collection. This greatly simplifies development and engineering optimization.

The following describes in detail an inter-partition task scheduling process. A main idea of inter-partition task scheduling is as follows: Whether the inter-partition task scheduling needs to be initiated is determined based on partition criticalities of partitions. When the inter-partition task scheduling is needed, partition schedulers of two partitions between which inter-partition scheduling is to be performed perform the inter-partition task scheduling.

Optionally, when a quantity of partitions of the computing system is small (for example, the quantity of partitions is less than or equal to 4), when the inter-partition task scheduling is performed between the partitions, the partition schedulers perform point-to-point negotiation to perform the inter-partition task scheduling, and the upper-level federation scheduler (namely, the L2 scheduler) does not need to be cascaded. When a quantity of partitions in the computing system is large (for example, the quantity of partitions is greater than 4), one upper-level federation scheduler (namely, the L2 scheduler) may be cascaded. The L2 scheduler aggregates all the partition criticalities, determines whether to initiate the inter-partition task scheduling, and determines two partitions between which the inter-partition task scheduling is performed.

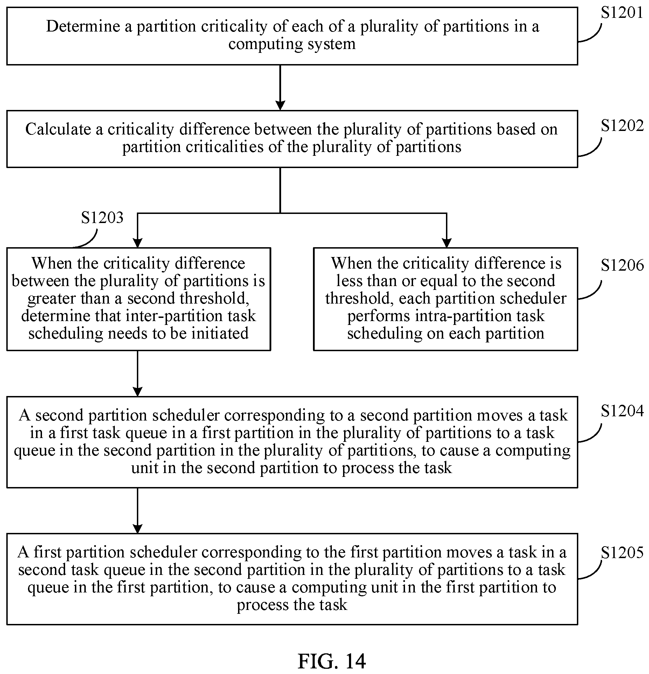

For an inter-partition task scheduling scenario, as shown in FIG. 14, the task scheduling method provided in embodiments of this application includes S1201 to S1206.

S1201: Determine the partition criticality of each of the plurality of partitions in the computing system.

The partition criticality indicates a latency tolerance of the computing unit in the partition for a to-be-scheduled task, and the partition criticality is a basis used to determine whether to perform inter-partition queue switching on a task (namely, a basis for determining whether to perform the inter-partition task scheduling).

In this embodiment of this application, the partition criticality of each partition is determined by the partition scheduler corresponding to the partition. The partition criticality is a proportion of a processing core whose value of core criticality is greater than a first threshold in core criticalities of a plurality of processing cores in one partition, where the core criticality is determined based on a latency tolerance of the processing core for a task running on the processing core. For detailed content of a partition criticality determining process, refer to descriptions of the partition criticality in the foregoing technical term description. Details are not described herein again.

S 1202: Calculate a criticality difference between the plurality of partitions based on partition criticalities of the plurality of partitions.

The criticality difference indicates a difference between the partition criticalities of the plurality of partitions, and the criticality difference between the plurality of partitions may be used to measure whether task scheduling in the entire computing system is balanced.

In an implementation, when no L2 scheduler exists in the computing system, after the partition scheduler of each partition determines the partition criticality, the plurality of partition schedulers perform point-to-point communication with each other, and transfer partition criticalities of the partitions respectively managed by the plurality of partition schedulers. In this way, each partition scheduler may summarize partition criticalities of all the partitions, and then one or more of the schedulers calculate the criticality difference between the plurality of partitions based on the plurality of partition criticalities. For example, a partition scheduler corresponding to one partition with a highest partition criticality and a partition scheduler corresponding to one partition with a lowest partition criticality may calculate the criticality difference between the plurality of partitions, and determine, based on the criticality difference, whether the inter-partition task scheduling needs to be initiated.

In another implementation, when an L2 scheduler exists in the computing system, the L2 scheduler may calculate the criticality difference between the plurality of partitions. The L2 scheduler obtains the partition criticality of each of the plurality of partitions from the partition schedulers (in other words, the L2 scheduler summarizes partition criticalities of all the partitions in the computing system), calculates the criticality difference between the plurality of partitions based on the plurality of partition criticalities, and determines, based on the criticality difference, whether the inter-partition task scheduling needs to be initiated.

Optionally, a method for summarizing the partition criticalities of all the partitions by the L2 scheduler may be: The partition scheduler of each partition separately reports, to the L2 scheduler, the partition criticality of the partition managed by the partition scheduler.

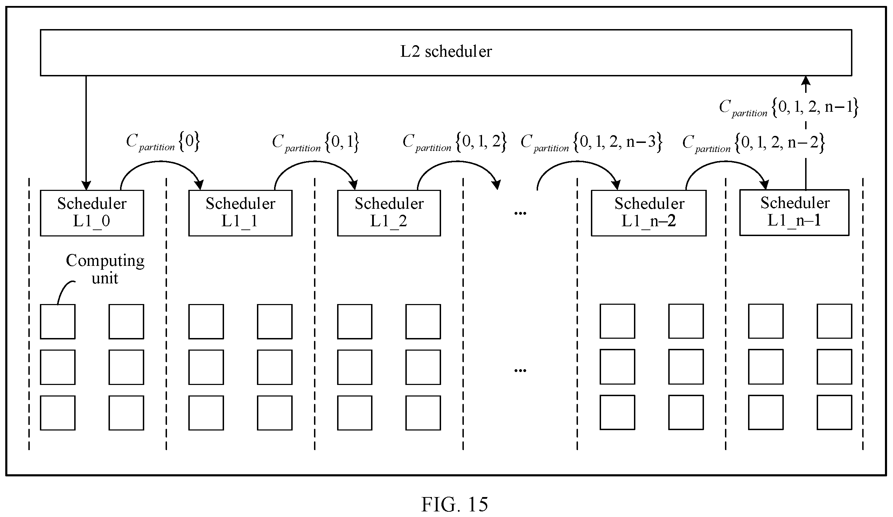

Optionally, another method for summarizing the partition criticalities of all the partitions by the L2 scheduler may be: summarizing the partition criticalities of the plurality of partitions by using a Ring-All Reduce algorithm. For example, refer to FIG. 15. It is assumed that the computing system includes n partitions, the partitions are numbered from 0 to n-1, the n partitions are denoted as a partition 0 to a partition n-1, and n partition schedulers corresponding to the n partitions are respectively denoted as a scheduler L1_0 to a scheduler L1_n-1. The partition schedulers of the plurality of partitions transfer the partition criticalities by using the Ring-All Reduce algorithm.

For example, the scheduler L1_0 in FIG. 15 reports a partition criticality *Cₚₐᵣₜᵢₜᵢₒₙ* {0} of the partition 0 to the scheduler L1_1. The scheduler L1_1 summarizes the partition criticality of the partition 0 and a partition criticality of the partition 1 to obtain *Cₚₐᵣₜᵢₜᵢₒₙ* {0, 1}, and reports *Cₚₐᵣₜᵢₜᵢₒₙ* {0, 1} to the scheduler L1_2. The scheduler L1_2 summarizes the partition criticality of the partition 0, the partition criticality of the partition 1, and a partition criticality of the partition 2 to obtain *Cₚₐᵣₜᵢₜᵢₒₙ* {0,1,2}, and reports *Cₚₐᵣₜᵢₜᵢₒₙ* {0, 1, 2} to a next L1 scheduler. By analogy, after receiving *Cₚₐᵣₜᵢₜᵢₒₙ* {0, 1, 2, n-3} sent by the scheduler L1_n-3, the scheduler L1_n-2 summarizes the previous partition criticalities and a partition criticality of the partition n-2 to obtain *Cₚₐᵣₜᵢₜᵢₒₙ*{0, 1, 2, n-2} , and reports *Cₚₐᵣₜᵢₜᵢₒₙ* {0, 1, 2, n-2} to the scheduler L1_n-1. Finally, the scheduler L1_n-1 summarizes the received partition criticalities and a partition criticality of the partition n-1 to obtain *Cₚₐᵣₜᵢₜᵢₒₙ* {0, 1, 2, n-1}, and reports *Cₚₐᵣₜᵢₜᵢₒₙ* {0, 1, 2, n-1} to the upper-level scheduler L2.

The Ring-All Reduce algorithm is a method for efficiently summarizing information. The partition criticalities are summarized to the L2 scheduler by using the method, so that a data amount for summarizing the partition criticalities can be reduced, and overheads can be reduced.

Optionally, the criticality difference between the plurality of partitions is a covariance of the criticalities of the plurality of partitions. A formula for calculating the covariance of the criticalities of the plurality of partitions is as follows: $COV = \frac{σ}{C}$ $σ = \sqrt{{\sum }_{i = 0}^{n - 1} {\left({C}_{i}-C\right)}^{2}}$ $C = \frac{{\sum }_{i = 0}^{n - 1} {C}_{i}}{n}$

COV represents the criticality difference, σ represents the covariance of the partition criticalities, C represents an average value of the partition criticalities, *Cᵢ* represents a partition criticality of a partition *i*, and n represents a quantity of partitions in the computing system.

S1203: When the criticality difference between the plurality of partitions is greater than a second threshold, determine that the inter-partition task scheduling needs to be initiated.

It should be understood that, when the criticality difference between the plurality of partitions is large, it indicates that for the entire computing system, global task scheduling is unbalanced, in other words, load is unbalanced. In other words, when the criticality difference between the plurality of partitions is large, in the computing system, compute resources of some partitions are sufficient, and compute resources of some partitions are insufficient. Therefore, balanced task scheduling between the partitions can be implemented through inter-partition task scheduling.

When it is determined that the inter-partition task scheduling needs to be initiated, the following S1204 and S1205 are performed to complete the inter-partition task scheduling.

S1204: A second partition scheduler corresponding to a second partition moves a task in a first task queue in a first partition in the plurality of partitions to a task queue in the second partition in the plurality of partitions, to cause a computing unit in the second partition to process the task.

S1205: A first partition scheduler corresponding to the first partition moves a task in a task queue in the second partition in the plurality of partitions to a task queue in the first partition, to cause a computing unit in the first partition to process the task.

The first partition and the second partition are two partitions between which inter-partition task scheduling needs to be performed, namely, two partitions between which bilateral peer-to-peer scheduling needs to be performed, in the plurality of partitions in the computing system. In the plurality of partitions, a difference between partition criticalities of the first partition and the second partition is the largest. For example, the first partition is a partition corresponding to a partition criticality with a largest value in the plurality of partition criticalities, and the second partition is a partition corresponding to a partition criticality with a smallest value in the plurality of partition criticalities. The first task queue is a queue with a highest priority in a plurality of task queues in the first partition, and the second task queue is a queue with a lowest priority in a plurality of task queues in the second partition.

Optionally, a method for determining the first partition and the second partition from the plurality of partitions includes the following two implementations.

In an implementation, when no L2 scheduler exists in the computing system, when the inter-partition task scheduling needs to be initiated, each partition scheduler may obtain the partition criticalities of all the partitions. Therefore, each partition scheduler may determine whether the partition in which the partition scheduler is located is a partition with a highest or lowest partition criticality. Then, a partition scheduler corresponding to the partition with the highest partition criticality and a partition scheduler corresponding to the partition with the lowest partition criticality interact with each other, to obtain a task from a task queue of the peer partition scheduler and move the task to a local task queue.

For example, the computing system includes four partitions (which are respectively a partition 1, a partition 2, a partition 3, and a partition 4), a partition with a highest partition criticality is the partition 1, and a partition with a lowest partition criticality is the partition 4. After a partition scheduler of the partition 1 obtains respective partition criticalities of the four partitions, the partition scheduler of the partition 1 may determine, based on the four partition criticalities, that the partition 1 with the highest partition criticality is the first partition. Similarly, after a partition scheduler of the partition 4 obtains the respective partition criticalities of the four partitions, the partition scheduler of the partition 4 may determine, based on the four partition criticalities, that the partition 4 with the lowest partition criticality is the second partition.

In another implementation, when an L2 scheduler exists in the computing system, and when the inter-partition task scheduling needs to be initiated, the L2 scheduler determines, from the plurality of partitions, a partition with a highest partition criticality as the first partition, and a partition with a lowest partition criticality as the second partition. In addition, the L2 scheduler separately sends a bilateral scheduling instruction to the first partition scheduler and the second partition scheduler, where the bilateral scheduling instruction instructs to perform inter-partition task scheduling on the first partition and the second partition.

In this embodiment of this application, after obtaining the partition criticalities of all the partitions through summarization, the L2 scheduler determines the partition with the highest partition criticality as the first partition, and determines the partition with the lowest partition criticality as the second partition. In addition, the L2 scheduler sends a first bilateral scheduling instruction to the L1 scheduler of the first partition, where the first bilateral scheduling instruction instructs to perform the inter-partition scheduling on the first partition and the second partition, the second bilateral scheduling instruction may include first indication information, and the first indication information indicates that the first partition is the partition with the highest partition criticality. The L2 scheduler sends a second bilateral scheduling instruction to a second partition criticality of the second partition, where the second bilateral scheduling instruction instructs to perform inter-partition scheduling on the first partition and the second partition, the second bilateral scheduling instruction may include second indication information, and the second indication information indicates that the second partition is the partition with the lowest partition criticality. Further, the first partition scheduler and the second partition scheduler interact with each other to obtain a task from a task queue of the peer partition scheduler and move the task to a local task queue.

The second partition scheduler moves the task in the first task queue (the task queue with the highest priority) in the first partition to the task queue in the second partition, and the processing core of the second partition processes the task (to distinguish the task from another task, the task is referred to as a first task below). In addition, the first scheduler moves the task in the second task queue (the task queue with the lowest priority) in the second partition to the task queue in the first partition, and the processing core of the first partition processes the task (the task is referred to as a second task below).

Optionally, the first task is a task that is in the first task queue in the first partition and that is arranged at the tail of the queue. After the second partition scheduler receives the bilateral scheduling instruction, the second partition scheduler first does not receive a new task, but preferentially obtains the first task from the first task queue in the first partition, and moves the first task to a task queue with a highest priority in the task queues in the second partition.

Optionally, the second task is a task that is in the second task queue in the second partition and that is arranged at the tail of the queue. The first partition scheduler moves the second task to a task queue with a lowest priority in the task queues in the first partition.

In some embodiments, if the first partition and the second partition between which the inter-partition task scheduling is to be performed share memory or cache, in an inter-partition task scheduling process, the second partition may move the first task in the first partition to any queue in the task queue in the second partition. In this way, no additional memory access may be caused, and overheads are reduced.

In some embodiments, if the first partition and the second partition between which the inter-partition task scheduling is to be performed share no memory, for the second partition, the first task is a new task, and data needs to be prepared before the new task is executed. In this case, a memory access operation exists. In this case, the second partition preferentially moves the first task in the first partition to a high-priority queue in the second partition.

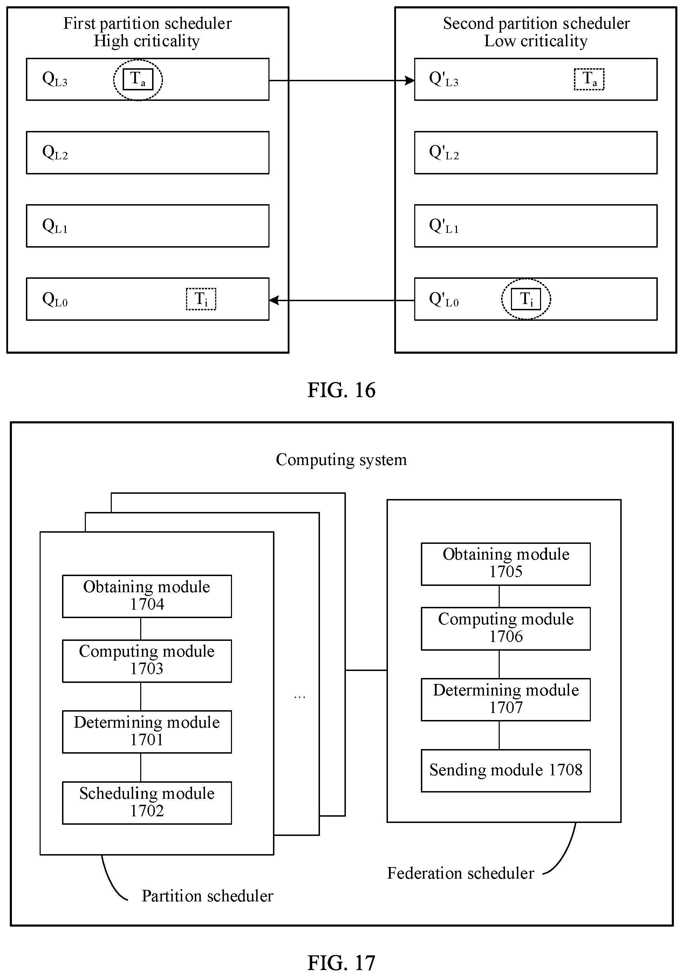

For example, refer to FIG. 16. It is assumed that the task queue in the first partition includes four queues of different priorities, where the four queues in ascending order of queue priorities are respectively Q_{L0}, Q_{L1}, Q_{L2}, and Q_{L3}; and the task queue in the second partition also includes four queues of different priorities, where the four queues in ascending order of queue priorities are respectively Q'_{L0}, Q'_{L1}, Q'_{L2}, and Q'_{L3}. When the inter-partition task scheduling is needed, and the task criticality of the first partition is higher than the task criticality of the second partition, the second partition scheduler obtains a task Tₐ from Q_{L3} with a highest priority in task queues in the first partition, and moves the task Tₐ to Q'_{L3} with a highest priority in task queues in the second partition. In addition, the first partition scheduler obtains a task Tᵢ from Q₀ with a lowest priority in the task queues of the second partition, and moves the task Tᵢ to Q_{L0} with a lowest priority in the task queues in the first partition.

Based on the foregoing descriptions, in an inter-partition task scheduling process, a partition with a high partition criticality obtains a task from a low-priority queue in a partition with a low partition criticality, so that the high partition criticality decreases. The partition with the low partition criticality obtains a task from a high-priority queue in the partition with the high partition criticality, so that the low partition criticality increases. In this way, a difference between the partition criticalities of the two partitions is reduced, and balanced task scheduling between the two partitions is implemented.

It should be noted that, in some cases, the difference between the partition criticalities of the partitions in the computing system is small (that is, the criticality difference between the plurality of partitions is less than the second threshold), but task timeout of some partitions is very severe (for example, a task timeout coefficient is very high). In this case, a task scheduler of another partition may obtain a timeout task (task latency exceeds a threshold) from a task queue in the partition in which the task timeout exists, and move the timeout task to a high-priority queue, so that a task timeout problem can be resolved.

Optionally, in this embodiment of this application, for a heterogeneous multi-core computing system, during inter-partition task scheduling, the inter-partition task scheduling may be performed between partitions of a same processor type, and the inter-partition task scheduling may also be performed between partitions of different processor types.

For example, cores of processors in a computing system including one heterogeneous processor of one 48-core CPU (the CPU also has a vector processing or matrix processing function) and four 128-core GPUs are divided into 10 partitions: {P0, P1, ..., and P9}. The 48-core CPU is divided into two partitions: P0 and P1, and each partition includes 24 processing cores. The four 128-core GPUs are divided into eight partitions: P2 to P9, and each partition includes 64 processing cores. During inter-partition task scheduling, inter-partition scheduling may be performed between P0 and P1, inter-partition scheduling may be performed between P2 to P9, and inter-partition task scheduling may also be performed between partitions divided in heterogeneous processors. For example, the inter-partition task scheduling is performed between P1 and P2.

It should be noted that, when the inter-partition task scheduling is performed between the partitions divided in the heterogeneous processors, machine code modules that are respectively applicable to a processor type 1 (for example, the CPU) and a processor type 2 (the GPU) to run a same task need to be generated by using a heterogeneous compiler. That is, two executable libraries that are applicable to the processor type 1 (the CPU) and the processor type 2 (the GPU) are compiled in advance. For example, for a task 1, an executable library 1 for executing the task 1 by the CPU and an executable library 2 for executing the task 1 by the GPU need to be compiled in advance. When the task 1 is originally executed by the CPU of the partition P1, the task 1 is run based on the executable library 1. When the inter-partition task scheduling is performed on P1 and P2, the task 1 is subsequently executed by the GPU of the partition 2. When the task 1 is executed by the GPU, the task 1 is run based on the executable library 2. This implements inter-heterogeneous core task scheduling, and can improve processing core utilization of the computing system.

S1206: When the criticality difference is less than or equal to the second threshold, each partition scheduler performs intra-partition task scheduling on each partition.

It should be understood that, when the criticality difference between the plurality of partitions is small, it indicates that for the entire computing system, global task scheduling is balanced, the inter-partition task scheduling does not need to be performed, and task self-scheduling is performed in each partition.

For detailed descriptions of intra-partition task scheduling, refer to detailed descriptions of S901 to S903 and related content in the foregoing embodiment. Details are not described herein again.

Based on the foregoing content, the task scheduling method provided in embodiments of this application is a dynamic task scheduling method. The computing system may be partitioned, and the intra-partition task self-scheduling is performed, so that the resource utilization of the processing core in the partition can be improved. When the criticality difference between the partitions is large, the inter-partition task scheduling is performed, so that resource utilization of the computing system can be improved.

Further, the task scheduling method is applicable to various regular or irregular tasks, and has good generalization. For example, for various types of CPU parallel tasks, regardless of compute-intensive, memory access-intensive, complex task dependency, or complex control flow (for example, QR decomposition, Cholesky decomposition, and Heat Diffusion), balanced parallel running is implemented between multi-core processors, thereby improving overall performance of the computing system.

Optionally, in this embodiment of this application, for the many-core computing system, there are a large quantity of partitions in the computing system, an L1 scheduler is cascaded to a plurality of L2 schedulers, and the plurality of L2 schedulers may further be cascaded to an L3 scheduler. The L2 scheduler and the L3 scheduler are responsible for coarse-grained balanced task scheduling, and coarser-grained scheduling is implemented by using the L3 scheduler.

For example, the computing system includes a plurality of compute nodes, each compute node includes a plurality of processors, and each processor includes a plurality of processing cores. In this case, one L1 scheduler manages a partition of a plurality of cores, one L2 scheduler manages a plurality of L1 schedulers (which is equivalent to that one L2 scheduler manages a plurality of partitions), the plurality of partitions may be defined as one domain, and one L3 scheduler manages a plurality of L2 schedulers (which is equivalent to that one L3 scheduler manages a plurality of domains of the computing system). Optionally, one domain may be one rack. For example, a plurality of (for example, eight) servers may be defined as one rack, and one L2 is responsible for managing the plurality of servers. When there are a large quantity of racks, an L3 scheduler is further cascaded at an upper layer of a plurality of L2 schedulers, and the L3 scheduler is responsible for global scheduling of the computing system.

Each L1 scheduler is responsible for performing, based on a task criticality, intra-partition task scheduling on a partition managed by the L1 scheduler. After determining a partition criticality, the L1 scheduler reports the partition criticality to the L2 scheduler. The L2 scheduler determines, based on a plurality of summarized partition criticalities, whether inter-partition task scheduling needs to be performed between a plurality of partitions managed by the L2 scheduler. Further, each L2 scheduler may determine, based on the plurality of partition criticalities collected by the L2 scheduler, a domain criticality of a domain managed by the L2 scheduler, and report the domain criticality to the L3 scheduler. The L3 scheduler determines, based on the plurality of summarized domain criticalities, a difference between the domain criticalities of the plurality of domains managed by the L3 scheduler, and determines whether inter-domain task scheduling needs to be performed.

A method for determining and reporting the domain criticality may be similar to the foregoing method for determining and reporting the partition criticality, and a method for determining the difference between the domain criticalities by the L3 scheduler may also be similar to a process of determining the difference between the partition criticalities by the L2 scheduler. For details, refer to related descriptions in the foregoing embodiments.

In this embodiment of this application, when determining, based on the plurality of domain criticalities, that the difference between the plurality of domain criticalities exceeds a threshold, the L3 scheduler determines that the inter-domain task scheduling needs to be performed. The L3 scheduler determines, from the plurality of domains, two domains with a relatively large difference between domain criticalities, and then selects one partition from each of the two domains, to perform inter-partition task scheduling between the two partitions. For example, the L3 scheduler selects one partition (referred to as a first target partition) with a largest partition criticality from a domain with a largest domain criticality, and selects a partition (referred to as a second target partition) with a smallest partition criticality from a domain with a smallest domain criticality, to indicate to perform inter-partition task scheduling between the first target partition and the second target partition.

In the foregoing, the L1 scheduler, the L2 scheduler, and the L3 scheduler are responsible for scheduling of different granularities in the computing system, so that task scheduling of the computing system can be more balanced, and resource utilization of the computing system can be improved.

An embodiment of this application further provides a computing system. As shown in FIG. 17, the computing system includes a plurality of partition schedulers. Each partition scheduler includes a determining module 1701 and a scheduling module 1702. The determining module 1702 is configured to perform S901, S9012, S902, and S1203 in the foregoing method embodiments. The scheduling module 1702 is configured to perform S903 (including S9031 and S9032), S1201, S1204, and S1205 in the foregoing method embodiments.

Optionally, each of the plurality of partition schedulers includes a computing module 1703 and an obtaining module 1704. The computing module 1703 is configured to perform S1202 in the foregoing method embodiment. The obtaining module 1704 is configured to perform S9012 in the foregoing method embodiment.

Optionally, the computing system further includes a federation scheduler. The federation scheduler is configured to manage the plurality of partition schedulers. The federation scheduler includes an obtaining module 1705, a computing module 1706, a determining module 1707, and a sending module 1708. The obtaining module 1705 is configured to obtain partition criticalities of the plurality of partitions. The computing module 1706 is configured to calculate a criticality difference between the partitions. The determining module 1707 is configured to determine whether to initiate inter-partition task scheduling. The sending module 1708 is configured to send a bilateral scheduling instruction to the partition scheduler.

For more details about implementing the foregoing functions by the foregoing modules, refer to descriptions in the foregoing method embodiments. Details are not described herein again. Embodiments in this specification are all described in a progressive manner, for same or similar parts in embodiments, reference may be made to these embodiments, and each embodiment focuses on a difference from other embodiments.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a magnetic disk, or a magnetic tape), an optical medium (for example, a digital video disc (digital video disc, DVD)), a semiconductor medium (for example, a solid state drive (solid state drive, SSD)), or the like.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented based on requirements, that is, an inner structure of an apparatus is divided into different functional modules to implement all or some of the functions described above. For a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, the division into the modules or units is merely logical function division and may be other division in actual implementation. For example, a plurality of units or assemblies may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) or a processor to perform all or some of the steps of the method according to embodiments of this application. The foregoing storage medium includes any medium that can store program code, for example, a flash memory, a removable hard disk, a read-only memory, a random access memory, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A task scheduling method, used to perform task scheduling on a computing system, wherein the computing system comprises a plurality of computing units, the plurality of computing units are divided into a plurality of partitions, each of the plurality of partitions corresponds to one partition scheduler, each partition comprises a plurality of task queues that are of different priorities and that are configured based on task criticalities, and the task criticality is determined based on a latency tolerance of a computing unit for a task that is run by the computing unit; and the method comprises:
determining a partition criticality of each of the plurality of partitions, wherein the partition criticality indicates a latency tolerance of a computing unit in the partition for a to-be-scheduled task;
when it is determined, based on the partition criticality of each of the plurality of partitions, that inter-partition task scheduling needs to be initiated, moving, by a second partition scheduler, a task in a first task queue in a first partition in the plurality of partitions to a task queue in a second partition in the plurality of partitions, to cause a computing unit in the second partition to process the task, wherein the second partition scheduler is a partition scheduler corresponding to the second partition; and
moving, by a first partition scheduler, a task in a second task queue in the second partition in the plurality of partitions to a task queue in the first partition, to cause a computing unit in the first partition to process the task, wherein the first partition scheduler is a partition scheduler corresponding to the first partition, and a priority of the first task queue is different from a priority of the second task queue.

2. The method according to claim 1, wherein
the plurality of computing units comprise a processing core of one or more processors, wherein the one or more processors comprise a heterogeneous first processor and/or a heterogeneous second processor.

3. The method according to claim 1 or 2, wherein
the partition criticality is a proportion of a processing core whose value of core criticality is greater than a first threshold in core criticalities of a plurality of processing cores in one partition, wherein the core criticality is determined based on a latency tolerance of the processing core for a task running on the processing core.

4. The method according to any one of claims 1 to 3, wherein the method further comprises:
calculating a criticality difference between the plurality of partitions based on partition criticalities of the plurality of partitions, wherein the criticality difference indicates a difference between the plurality of partition criticalities of the plurality of partitions; and
when the criticality difference is greater than a second threshold, determining that the inter-partition task scheduling needs to be initiated; or
when the criticality difference is less than or equal to the second threshold, scheduling, by each partition scheduler, a task in each partition.

5. The method according to any one of claims 1 to 4, wherein the plurality of partitions correspond to one federation scheduler, and the federation scheduler is configured to manage the plurality of partition schedulers;
the determining the partition criticality of each of the plurality of partitions comprises:
obtaining, by the federation scheduler, the partition criticality of each of the plurality of partitions from the partition scheduler; and
the method further comprises:
when determining, based on the partition criticality of each of the plurality of partitions, that the inter-partition task scheduling needs to be initiated, determining, by the federation scheduler, the first partition and the second partition from the plurality of partitions, wherein the first partition is a partition corresponding to a partition criticality with a largest value in the plurality of partition criticalities, and the second partition is a partition corresponding to a partition criticality with a smallest value in the plurality of partition criticalities; and
separately sending, by the federation scheduler, a bilateral scheduling instruction to the first partition scheduler and the second partition scheduler, wherein the bilateral scheduling instruction instructs to perform inter-partition task scheduling on the first partition and the second partition.

6. The method according to claim 5, wherein
the priority of the task queue increases as the task criticality increases, and quantities of time slices allocated to the queues of different priorities are different, wherein the task criticality increases as a latency tolerance of the processing core for the task decreases; and
the first task queue is a queue with a highest priority in task queues in the first partition, and the second task is a queue with a lowest priority in task queues in the second partition.

7. The method according to any one of claims 1 to 6, wherein the scheduling, by each partition scheduler, the task in each partition comprises:
for any one of the plurality of tasks in each partition, in a process in which a computing unit executes the task, updating, by the partition scheduler, a queue to which the task belongs, to cause a processing core to execute the task based on a priority of a queue to which the task belongs.

8. The method according to claim 7, wherein the updating the queue to which the task belongs comprises:
updating a task criticality of the task; and
updating, based on the task criticality of the task, the queue to which the task belongs, wherein when the task criticality of the task increases, the partition scheduler moves the task from the current queue to a queue whose priority is higher than a priority of the current queue; or when the task criticality of the task decreases, the partition scheduler moves the task from the current queue to a queue whose priority is lower than the priority of the current queue.

9. The method according to any one of claims 1 to 8, wherein the method further comprises:
obtaining, by each partition scheduler, a task dependency between the plurality of tasks in the partition;
respectively determining, by the partition scheduler, initial task criticalities of the plurality of tasks based on task dependency depths indicated by the task dependency; and
respectively determining, by the partition scheduler based on the initial task criticalities of the plurality of tasks, initial queues for the plurality of tasks from the plurality of queues of different priorities in the partition.

10. A computing system, comprising a plurality of partition schedulers, wherein a plurality of computing units of the computing system are divided into a plurality of partitions, each of the plurality of partitions corresponds to one partition scheduler, each partition comprises a plurality of task queues that are of different priorities and that are configured based on task criticalities, the task criticality is determined based on a latency tolerance of a computing unit for a task that is run by the computing unit, and each partition scheduler comprises a determining module and a scheduling module, wherein
the determining module of each of the plurality of partition schedulers is configured to determine a partition criticality of each of the plurality of partitions, wherein the partition criticality indicates a latency tolerance of a computing unit in the partition for a to-be-scheduled task;
a scheduling module of a second partition scheduler is configured to: when it is determined, based on the partition criticality of each of the plurality of partitions, that inter-partition task scheduling needs to be initiated, move a task in a first task queue in a first partition in the plurality of partitions to a task queue in a second partition in the plurality of partitions, to cause a computing unit in the second partition to process the task, wherein the second partition scheduler is a partition scheduler corresponding to the second partition; and
a scheduling module of the first partition scheduler is configured to: when it is determined, based on the partition criticality of each of the plurality of partitions, that the inter-partition task scheduling needs to be initiated, move a task in a second task queue in the second partition in the plurality of partitions to a task queue in the first partition, to cause a computing unit in the first partition to process the task, wherein the first partition scheduler is a partition scheduler corresponding to the first partition, and a priority of the first task queue is different from a priority of the second task queue.

11. The computing system according to claim 10, wherein
the plurality of computing units comprise a processing core of one or more processors, wherein the one or more processors comprise a heterogeneous first processor and/or a heterogeneous second processor.

12. The computing system according to claim 10 or 11, wherein
the partition criticality is a proportion of a processing core whose value of core criticality is greater than a first threshold in core criticalities of a plurality of processing cores in one partition, wherein the core criticality is determined based on a latency tolerance of the processing core for a task running on the processing core.

13. The computing system according to any one of claims 10 to 12, wherein each of the plurality of partition schedulers comprises a computing module, wherein
the computing module of the partition scheduler is configured to calculate a criticality difference between the plurality of partitions based on partition criticalities of the plurality of partitions, wherein the criticality difference indicates a difference between the plurality of partition criticalities of the plurality of partitions; and
the determining module of the partition scheduler is further configured to: when the criticality difference is greater than a second threshold, determine that the inter-partition task scheduling needs to be initiated; or
the scheduling module of the partition scheduler is configured to: when the criticality difference is less than or equal to the second threshold, schedule a task in each partition.

14. The computing system according to any one of claims 10 to 12, wherein the computing system further comprises a federation scheduler, the plurality of partitions correspond to one federation scheduler, the federation scheduler is configured to manage the plurality of partition schedulers, and the federation scheduler comprises an obtaining module, a computing module, a determining module, and a sending module, wherein
the obtaining module of the federation scheduler is configured to obtain the partition criticality of each of the plurality of partitions from the partition scheduler;
the computing module of the federation scheduler is configured to calculate a criticality difference between the plurality of partitions based on partition criticalities of the plurality of partitions, wherein the criticality difference indicates a difference between the plurality of partition criticalities of the plurality of partitions;
the determining module of the federation scheduler is configured to: when it is determined, when the criticality difference is greater than a second threshold, that the inter-partition task scheduling needs to be initiated, determine the first partition and the second partition from the plurality of partitions, wherein the first partition is a partition corresponding to a partition criticality with a largest value in the plurality of partition criticalities, and the second partition is a partition corresponding to a partition criticality with a smallest value in the plurality of partition criticalities; and
the sending module of the federation scheduler is configured to separately send a bilateral scheduling instruction to the first partition scheduler and the second partition scheduler, wherein the bilateral scheduling instruction instructs to perform inter-partition task scheduling on the first partition and the second partition.

15. The computing system according to claim 14, wherein
the priority of the task queue increases as the task criticality increases, and quantities of time slices allocated to the queues of different priorities are different, wherein the task criticality increases as the latency tolerance of the processing core for the task decreases; and
the first task queue is a queue with a highest priority in task queues in the first partition, and the second task is a queue with a lowest priority in task queues in the second partition.

16. The computing system according to any one of claims 10 to 15, wherein
the scheduling module of each partition scheduler is specifically configured to: for any one of the plurality of tasks in each partition, in a process in which a computing unit executes the task, update a queue to which the task belongs, to cause a processing core to execute the task based on a priority of a queue to which the task belongs.

17. The computing system according to claim 16, wherein
the scheduling module is specifically configured to: update a task criticality of the task; and update, based on the task criticality of the task, the queue to which the task belongs, wherein when the task criticality of the task increases, the partition scheduler moves the task from the current queue to a queue whose priority is higher than a priority of the current queue; or when the task criticality of the task decreases, the partition scheduler moves the task from the current queue to a queue whose priority is lower than the priority of the current queue.

18. The computing system according to any one of claims 10 to 17, wherein each partition scheduler further comprises an obtaining module, wherein
the obtaining module of each partition scheduler is configured to obtain a task dependency between the plurality of tasks in the partition; and
the determining module of each partition scheduler is further configured to: respectively determine initial task criticalities of the plurality of tasks based on task dependency depths indicated by the task dependency; and respectively determine, based on the initial task criticalities of the plurality of tasks, initial queues for the plurality of tasks from the plurality of queues of different priorities in the partition.

19. A compute device, comprising a storage and at least one processor connected to the storage, wherein the storage is configured to store computer program code, the computer program code comprises computer instructions, and when the computer instructions are executed by the at least one processor, the compute device is caused to perform the method according to any one of claims 1 to 9.

20. A computer-readable storage medium, storing computer instructions, wherein when the computer instructions are run on a computer, the method according to any one of claims 1 to 9 is performed.
